# FASCICULE DE BREVET EUROPEEN

(11) **EP 4 399 862 B1**
(45) Date de publication et mention de la délivrance du brevet: **28.05.2025**
(21) Numéro de dépôt: 22773521.4
(22) Date de dépôt: 07.09.2022
(51) Int. Cl.: H04L 69/22, H04L 43/18

(54) **PROCÉDÉ ET SYSTÈME D'ANALYSE DE FLUX DE DONNÉES**
VERFAHREN UND SYSTEM ZUR ANALYSE VON DATENSTRÖMEN
METHOD AND SYSTEM FOR ANALYSING DATA FLOWS

(30) Priorité: 07.09.2021 FR 2109379
(43) Date de publication de la demande: 17.07.2024
(73) Titulaire: Nano Corp., 75010 PARIS (FR)
(72) Inventeur: COURVOISIER, François, 75010 Paris (FR); LE PICARD, Frédéric, 75010 Paris (FR)
(74) Mandataire: Nicolle, Olivier
(86) Numéro de dépôt international: PCT/EP2022/074915
(87) Numéro de publication internationale: WO 2023/036846

(56) Documents cités:
- EP-A1- 1 788 490
- US-A1- 2006 106 583

## Description

Les développements technologiques en matière de mise en réseau ont entrainé une augmentation des vitesses de mise en réseau au-delà des capacités de supervision du réseau et de l'équipement de gestion du trafic utilisé. L'équipement connu de supervision du réseau et de gestion du trafic comprend généralement des sondes réseau, conçues pour surveiller un flux de données reçu via un réseau de communication.

En pratique, les sondes réseau sont conçues pour traiter un flux fixe de données et surveiller des mesures spécifiques de ces données. En conséquence, chaque fois que le flux de données augmente et/ou qu'une nouvelle mesure de flux de données est identifiée pour la surveillance, ces sondes réseau doivent être repensées pour modifier leurs capacités de traitement afin de gérer le flux modifié de données.

Pour atténuer les inefficacités associées aux sondes réseau matérielles, on connait des solutions logicielles de supervision réseau et de gestion du trafic dans lesquelles on exécute une inspection approfondie des paquets (DPI) sur seulement quelques paquets, cette solution technique est appelée « Packet Sampling » (c'est-à-dire le fait de prendre des paquets complètement au hasard dans un flux réseau pour en réaliser un échantillonnage). Une telle solution connue permet d'éviter une surcharge de traitement élevée et des latences réseau plus élevées. Toutefois, une telle solution antérieure n'est pas totalement satisfaisante, car l'analyse est exécutée limitativement sur des chaines de protocoles ou session de communication comprenant cinq champs fixes (champ source, champ destinataire, port source, port destinataire, protocole de communication). Il en résulte qu'une telle analyse selon l'art antérieur ne permet pas de traiter des chaines ou session de protocoles dont le socle d'identification se base sur une valeur de 5-tuple (IP source, IP Destination, Port Source, Port destination et application), ni sur des protocoles de tunneling à détection retardée, ni dans les couches 2 à 7 du modèle d'interconnexion des systèmes ouverts (OSI).

On connait aussi une autre solution telle que celle présentée par le document EP 1 788 490 A (APPTITUDE INC), enseignant une architecture reposant sur l'implémentation d'une partie hardware spécifique FPGA et ASICs, et d'une partie logicielle impliquant un découpage de paquet (packet slicing en anglais).

Selon la solution décrite dans EP 1 788 490 A, le payload ou contenu attaché d'une couche protocolaire est au moins en partie gardé en mémoire d'abord dans le FPGA, puis délégué au processeur et à la RAM. L'architecture matérielle ne permet pas de retenir l'état d'une session suffisamment longtemps. Le système est fortement ralenti lors d'une analyse d'un flux de données de débit important et empêche une identification a posteriori des protocoles. De plus, le FPGA ayant une mémoire limitée, celui-ci doit vider son cache périodiquement, ce qui entraine la perte d'informations et de paquets de données, et peut mener à des statistiques d'analyse inexactes. De plus, l'utilisation du découpage de paquet (packet slicing), le réassemblage pour analyse implique donc un risque de perte d'informations. En outre, la gestion de la table d'empreintes numériques calculées sur la base de cinq tuples (adresse IP source/un numéro de port, une adresse IP/un numéro de port de destination et le protocole utilisé) implique l'identification d'une session sur la base d'un calcul d'empreinte numérique ne prenant en compte qu'une seule couche d'identification alors que dans le cas de sessions construites sur plusieurs protocoles tunnelés ou multiplexés, l'encapsulation crée plusieurs sessions cachées qu'il devient impossible d'identifier avec un 5-tuple. De plus, le chiffrement des communications ajoute de la variation qui va également fausser les comparaisons avec une base d'empreintes numériques de malware. Enfin, la solution selon EP 1 788 490 prend en compte le payload dans le calcul du hash ce qui entrainera trop de variations des valeurs d'analyse pour rester pertinentes dans le cadre d'une comparaison, et l'approche de calcul de 5-tuple.

De plus, à très haut débit, l'utilisation pour le calcul de l'empreinte numérique ou hash selon une méthode de 5-tuple combinant des techniques matérielles (FPGA ou ASIC) et Packet Slicing (découpage du paquet sur les couches inférieures ou supérieures) pour accélérer le traitement des paquets, provoque nativement une perte de visibilité et des erreurs en cascades.

De plus, l'approche 5-tuple pour deux sessions ayant le même 5-tuple, mais dont la couche inférieure est différente, (c'est-à-dire un réseau virtuel différent) sera interprété comme si les deux sessions identiques alors que ce n'est pas le cas, et entraine alors une perte d'information pouvant lourdement affecter les résultats d'analyse de données.

On entend par la suite par le terme « hash », une empreinte numérique calculée.

La présente invention remédie aux inconvénients et améliore la situation.

La présente invention porte sur un procédé d'analyse d'un flux de données de paquets de données reçus via un réseau de communication, le flux de données comprenant des lots de paquets définis chacun par une chaine de protocoles de communication rattachée à au moins une session.

Selon une définition générale de l'invention, le procédé comprend une analyse de protocoles selon les étapes suivantes :
- analyser le premier protocole Pi d'une chaine de protocoles de communication selon une étape de classification par détection explicite configurée pour vérifier si le premier protocole Pi annonce le protocole de communication suivant Pi+1 de la chaine de protocoles :
   - en cas d'annonce, le protocole suivant Pi+1 ainsi annoncé est identifié ;
   - tandis qu'en cas de non-annonce, analyser le protocole suivant Pi+1 selon une étape de classification par détection de session ;
   - analyser selon une étape de classification par détection de session, configurée pour vérifier si le protocole Pi+1 est attaché à une chaine de protocoles connue selon un arbre de décision dynamique par interrogation d'une base de données dynamique de session comprenant des chaines de protocoles identifiées:
      - en cas d'attache, le protocole Pi+1 est identifié, et le protocole Pi+2 est analysé par répétition des étapes de classification par détection explicite, de classification par détection de session;
      - tandis qu'en cas de non-attache, analyser le protocole Pi+1 selon une étape de classification par inspection profonde de paquet ;
   - analyser le protocole Pi+1 selon une étape de classification par inspection profonde de paquet, configurée pour identifier le protocole de communication du paquet Pi+1 selon un arbre de décision dynamique corrélé à une base de données de connaissances comprenant des paramètres d'analyse de protocoles et une base de marqueurs spécifiques à chaque protocole connu;
   - en cas de défaut d'identification du protocole Pi+1, émettre une liste de candidats de protocoles potentiels à prendre en compte selon au moins deux branches de détection, chaque détection étant rattachée à une sous-session déterminée pour analyser le ou les protocoles suivants Pi+n avec n>_2 par répétition des étapes de classification par détection explicite, de classification par détection de session, et de classification par inspection profonde de paquet jusqu'à identifier au moins un protocole dont l'identité est certaine ;
   - en cas d'identification d'un protocole Pi+n dont l'identité est certaine sur une branche de détection, valider rétroactivement la branche de détection, et écarter les branches de détection restantes non validées ;
   - en cas d'absence d'identification d'un protocole Pi+n dont l'identité est certaine sur une branche de détection, classifier le protocole Pi+1 comme inconnu rétroactivement ; et
- associer une étiquette aux paquets de données en fonction de chaque session pour lesquels les protocoles ont été identifiés.

Il est à noter que l'analyse des caractéristiques binaires de chaque paquet d'une session de communication (ou chaine de protocoles) est mise en œuvre selon l'invention jusqu'à être en mesure (ou non) de déterminer (identifier) le protocole utilisé dans cette session.

Une telle approche selon l'invention a l'avantage de permettre d'avoir un taux de labellisation plus élevé que les approches antérieures, dans la mesure où elle peut être exécutée depuis la couche 2 jusqu'à la couche 7 du modèle OSI, en une seule passe d'analyse des paquets. Elle permet aussi d'identifier des chaines de protocoles dans le cas de protocoles de tunneling, ou de protocoles à détection retardée ainsi qu'une détection continue, et ce, même si un protocole n'est pas identifié immédiatement, la détection des protocoles suivants continue.

De plus, grâce à l'usage de la base de données dynamique de sessions stockant les sessions de communication précédemment identifiées, la présente invention est plus rapide que les solutions antérieures basées sur une inspection de tous les paquets.

Selon un autre aspect de l'invention, le procédé comprend en outre après chaque étape de classification, une étape de calcul d'une empreinte numérique de session à partir d'une fonction de hachage choisie, ladite empreinte numérique de session étant calculée sur la base du premier protocole identifié, et sur l'empreinte numérique précédemment calculée de la chaîne de protocoles déjà identifiée sans prise en compte du contenu attaché, chaque empreinte numérique étant calculée sur la base de paramètres (ou tuple) choisis et spécifiques à chaque type de protocole, chaque type de protocole disposant d'un nombre propre de marqueurs définit ; et une étape d'enregistrement de l'empreinte numérique de session calculée après chaque étape d'identification de protocole suivant l'étape de classification de chaque protocole par inspection profonde de paquet ou après l'étape de validation rétroactive, dans une table de hash intégrée dans la base de données dynamique de session, chaque empreinte numérique étant liée à au moins une session choisie, lesdites empreintes numériques calculées après chaque étape de classification de chaque protocole par inspection profonde de paquet étant apte à être mis à jour rétroactivement en cas d'identification retardée d'un protocole selon l'étape de vérification.

Avantageusement, le Demandeur a observé que la gestion dynamique des empreintes numériques selon l'invention permet à l'empreinte numérique d'un protocole non validé d'être mise à jour a posteriori, celui-ci évoluant à mesure que le paquet est lu.

Cette algorithmie unique permet de pouvoir détecter tous les types de protocoles avec une seule sonde, soit non limitativement les enchainements protocolaires simples, complexes, tunnelés et multiplexés.

La gestion des empreintes numériques du procédé selon l'invention présente également l'avantage de s'affranchir d'une étape de découpage de la chaine protocolaire (slicing en anglais) et ainsi éliminer le risque de perte d'information, et permet en outre d'obtenir des identifiants réellement uniques sur la chaine de protocole, peu importe la longueur de ladite chaine de protocoles qui compose le ou les paquets.

En pratique, en cas de détection de protocoles tunnelés, multiplexés, multicanaux détectés de manière certaine, le procédé selon l'invention comprend les sous-étapes suivantes :
- Générer au moins une branche de détection par protocole vérifié à prendre en compte pour la détection ultérieure,
- Calculer une empreinte numérique de session à partir d'une fonction de hachage choisie pour chaque branche de détection, chaque branche de détection étant rattachée à une sous-session déterminée pour analyser le ou les protocoles suivants Pi+n ; et
- Enregistrer l'empreinte numérique de session de chaque branche de détection rattachée à une chaine de protocole, l'étape d'enregistrement étant configurée pour attribuer un identifiant unique à chaque branche de détection du/des protocoles tunnelés, multiplexés, ou multicanaux détectés.

Avantageusement, le procédé selon l'invention permet d'obtenir une empreinte numérique unique par canal, ou branche de protocoles détectés, et ainsi éviter une perte d'information telle que deux canaux disposant du même identifiant.

À titre d'exemple, la table de hash est mise à jour si la détection d'au moins un protocole d'une session nécessite la mise en œuvre d'une détection retardée sur plusieurs paquets.

En pratique, la base de données de connaissances comprend une base de données de connaissances statiques, dans laquelle la base de données de connaissances statiques comprend des marqueurs basés sur une connaissance empirique des caractéristiques des protocoles, et dans lesquels la connaissance empirique comprend des moyens algorithmiques de détection de protocoles basés sur des normes de localisation, des liens logiques entre les protocoles de communication, les requêtes pour commentaires et les modèles de fréquence des protocoles de communication.

En outre, le procédé selon l'invention comprend l'exécution d'une analyse de données suivie d'une extraction de données pour les paquets de données sur la base de l'étiquette associée.

Selon un premier mode de réalisation de l'invention, l'exécution de l'analyse de protocoles et l'exécution, de l'analyse et de l'extraction des données pour un paquet de données sont effectuées de manière dynamique sur un seul cœur de traitement d'un processeur multicœur.

Selon un second mode de réalisation de l'invention, l'exécution de l'analyse et l'extraction des données pour le paquet de données sont effectuées sur plusieurs cœurs de traitement d'un processeur multicœur.

En pratique, le procédé selon l'invention comprenant la séparation du flux de données en une pluralité de files d'attente de traitement dans laquelle l'analyse de protocoles suivie de l'analyse et de l'extraction des données sont effectuées sur des paquets de données dans chacune des files d'attente de traitement.

En outre, la séparation du flux de données dans la pluralité des files d'attente de traitement est basée sur un algorithme RSS de mise à l'échelle côté réception.

Selon un mode de réalisation du procédé selon l'invention, l'analyse de protocole est exécutée de manière dynamique sur les couches 2 à 7 du modèle de couches OSI.

L'invention a également pour objet un système informatique d'analyse d'un flux de données de paquets de données reçu via un réseau de communication, le flux de données comprenant des lots de paquets définis chacun par une chaine de protocoles de communication rattachée à au moins une session.

Selon une autre définition générale de l'invention, le système comprend un processeur comprenant au moins un cœur de traitement pour traiter un nombre prédéterminé de paquets de données par minute et un moteur d'analyse de protocole sur au moins un cœur de traitement, dans lequel le moteur d'analyse de protocole:
- analyse du premier protocole d'une chaine de protocoles de communication selon une étape de classification par détection explicite configurée ? Pour vérifier si le premier protocole annonce le protocole de communication suivant de la chaine de protocoles, en cas d'annonce, le protocole suivant ainsi annoncé est identifié, tandis qu'en cas de non-annonce, le moteur d'analyse est apte à analyser le protocole selon une étape de classification par détection de session ;
   - analyse selon une étape de classification par détection de session, configurée pour vérifier si le protocole Pi+1 est attaché à une chaine de protocoles connue selon un arbre de décision dynamique par interrogation d'une base de données dynamique de session comprenant des chaines de protocoles identifiées:
      - en cas d'attache, le protocole Pi+1 est identifié, et le moteur d'analyse est apte à analyser le protocole Pi+2 par répétition des étapes de classification par détection explicite, de classification par détection de session ;
      - tandis qu'en cas de non-attache, le moteur d'analyse est apte à analyser le protocole Pi+1 selon une étape de classification par inspection profonde de paquet ;
   - analyse le protocole Pi+1 selon une étape de classification par inspection profonde de paquet, configurée pour identifier le protocole de communication du paquet Pi+1 selon un arbre de décision dynamique corrélé à une base de données de connaissances comprenant des paramètres d'analyse de protocoles et une base de marqueurs spécifiques à chaque protocole connu;
   - en cas de défaut d'identification du protocole Pi+1, le moteur d'analyse est apte à émettre une liste de candidats de protocoles potentiels à prendre en compte selon au moins deux branches de détection, chaque détection étant rattachée à une sous-session déterminée pour analyser le ou les protocoles suivants Pi+n avec n>_2 par répétition des étapes de classification par détection explicite, de classification par détection de session, et de classification par inspection profonde de paquet jusqu'à identifier au moins un protocole dont l'identité est certaine ;
   - en cas d'identification d'un protocole Pi+n dont l'identité est certaine sur une branche de détection, le moteur d'analyse est apte à valider rétroactivement la branche de détection, et écarter les branches de détection restantes non validées ;
   - en cas d'absence d'identification d'un protocole Pi+n dont l'identité est certaine sur une branche de détection, le moteur d'analyse est apte à classifier le protocole Pi+1 comme inconnu rétroactivement ; et
   - un moteur d'étiquetage apte à associer une étiquette aux paquets de données en fonction des protocoles ainsi identifiés.

En pratique, le moteur d'analyse de protocole :
- calcule une empreinte numérique de session à partir d'une fonction de hachage choisie après chaque étape de classification, ladite empreinte numérique étant calculée sur la base du premier protocole identifié, et sur l'empreinte numérique précédemment calculée de la chaîne de protocoles déjà identifiée sans prise en compte du contenu attaché, chaque empreinte numérique est calculée sur la base de paramètres (ou tuple) choisis et spécifiques à chaque type de protocole, chaque type de protocole disposant d'un nombre propre de marqueurs définit (n-Tuples) ;
- enregistre l'empreinte numérique de session calculée après chaque étape d'identification de protocole suivant étape de classification de chaque protocole par inspection profonde de paquet ou après l'étape de validation rétroactive, dans une table de hash intégrée dans la base de données dynamique de session, chaque empreinte numérique étant liée à au moins une session choisie, lesdites empreintes numériques calculées après chaque étape de classification de chaque protocole par inspection profonde de paquet étant apte à être mise à jour rétroactivement en cas d'identification retardée d'un protocole selon l'étape de vérification.

Le moteur d'analyse de protocole du système selon l'invention comprend en outre en cas de détection de protocoles tunnelés, multiplexés, multicanal, ou multicanal multiplexés détectés de manière certaine,
- Génère au moins une branche de détection par protocole vérifié à prendre en compte pour la détection ultérieure,
- Calcule une empreinte numérique de session à partir d'une fonction de hachage choisie pour chaque branche de détection, chaque branche de détection étant rattachée à une sous-session déterminée pour analyser le ou les protocoles suivants ; et
- Enregistre l'empreinte numérique de session de chaque branche de détection rattachée à une chaine de protocole, l'enregistrement étant configuré pour attribuer un identifiant unique à chaque branche de détection du/des protocoles tunnelés, multiplexés, ou multicanaux détectés.

Le système selon l'invention comprend, en outre, une base de données de connaissances comportant une base de données de connaissances statiques dans laquelle la base de données de connaissances statiques comprend des marqueurs, aussi appelés labels, basés sur une connaissance empirique des caractéristiques des protocoles, et dans lesquels la connaissance empirique comprend des moyens algorithmiques de détection de protocoles basés sur des normes sur la localisation, des liens logiques entre les protocoles de communication, les requêtes pour commentaires et les modèles de fréquence des protocoles de communication.

En pratique, le système selon l'invention comprend un moteur d'analyse de contenu exécutable sur au moins un cœur de traitement pour analyser et extraire le paquet de données sur la base de l'étiquette associée.

Selon un mode de réalisation de l'invention, le moteur d'analyse de protocole et le moteur d'analyse de contenu effectuent consécutivement l'analyse de protocoles suivie de l'analyse et de l'extraction de données pour le flux de données de paquets de données, et dans lequel le moteur d'analyse de contenu effectue séparément l'analyse et l'extraction de données pour des paquets de données étiquetés différemment.

Le système selon l'invention comprend, en outre, une carte d'interface réseau couplée au processeur, dans laquelle la carte réseau sépare le flux de données des paquets de données en une pluralité de files d'attente de traitement, et dans laquelle le moteur d'analyse de protocole et le moteur d'analyse de contenu effectuent l'analyse des paquets et l'extraction de données des paquets sur chacune des pluralités de files d'attente de traitement.

**À** titre d'exemple, la carte réseau (NIC) sépare le flux de données des paquets de données en fonction de l'algorithme RSS de mise à l'échelle côté réception.

Le procédé et système selon l'invention permettent avantageusement d'identifier des couches protocolaires qui n'ont pas été annoncées. Dans le cas où ces protocoles ne s'annoncent pas, ou n'annoncent pas ceux qui suivent, et permettent de chercher un ensemble de marqueurs susceptibles de valider l'identification d'un protocole en particulier.

Avantageusement, le système et procédé selon l'invention permettent également de procéder à une validation par rebonds multiples et logiques des protocoles analysés si une couche décrétée comme "sûre" est validée, ladite couche « sûre » permettant ainsi de valider l'ensemble des choix de classification effectués. En d'autres termes, les empilements de protocoles qui précèdent pourrons être déduits correctement.

De manière surprenante, le procédé et le système selon l'invention permettent de pouvoir attendre plusieurs paquets pour valider une chaine d'empilement de protocoles pour une session donnée, et de pouvoir garder une unicité de session par branche tout en garantissant une empreinte numérique unique par session et par branche de détection en procédant à des calculs d'empreintes numériques continus sur chaque couche de protocoles contenus dans un paquet.

Enfin, le procédé et le système selon l'invention permettent de maintenir une granularité très profonde de l'analyse des données réseau, et ainsi limiter les erreurs d'identification de protocole et garantir des données d'analyse fiables.

### BRÈVE DESCRIPTION DES DESSINS

La figure 1 illustre un système informatique d'analyse d'un flux de données de paquets de données reçus via un réseau de communication, conformément à un exemple de mise en œuvre de la présente invention,
La figure 2 illustre les schémas du système informatique, conformément à un exemple de mise en œuvre de la présente invention,
La figure 3 illustre le système informatique d'analyse d'un flux de données de paquets de données reçus via un réseau de communication, conformément à un exemple de mise en œuvre de la présente invention,
La figure 4 illustre le flux d'événements à l'intérieur d'un noyau de traitement du système informatique, conformément à un exemple de mise en œuvre de la présente invention,
La figure 5 illustre l'étape de réception et de distribution des paquets par une carte d'interface réseau conformément à l'invention,
Les figures 6, 7 et 8 illustrent les étapes d'analyse d'un flux de données de paquets de données reçus via un réseau de communication, conformément à un exemple de mise en œuvre de la présente invention, et
Les figures 9, 10 et 11 illustrent des exemples d'analyse linéaire conformément à l'invention ;
Les figures 12, 13, et 14 illustrent un exemple d'analyse appliquée à une détection de protocoles à détection retardée conformément à l'invention ;
La figure 15 illustre un exemple d'analyse appliquée à une détection de protocoles avec gestion d'une table de hash associée conforme à l'invention ;
Les figures 16 et 17 illustrent la gestion des empreintes numériques lors de la détection conforme à l'invention ; et
La figure 18 illustre un exemple d'analyse appliquée à une détection de protocoles multiplexés et multicanal avec gestion d'une table de hash associée conforme à l'invention.

**D'autres** avantages et caractéristiques de l'invention apparaitront à l'examen de la description et des dessins.

### DESCRIPTION DÉTAILLÉE

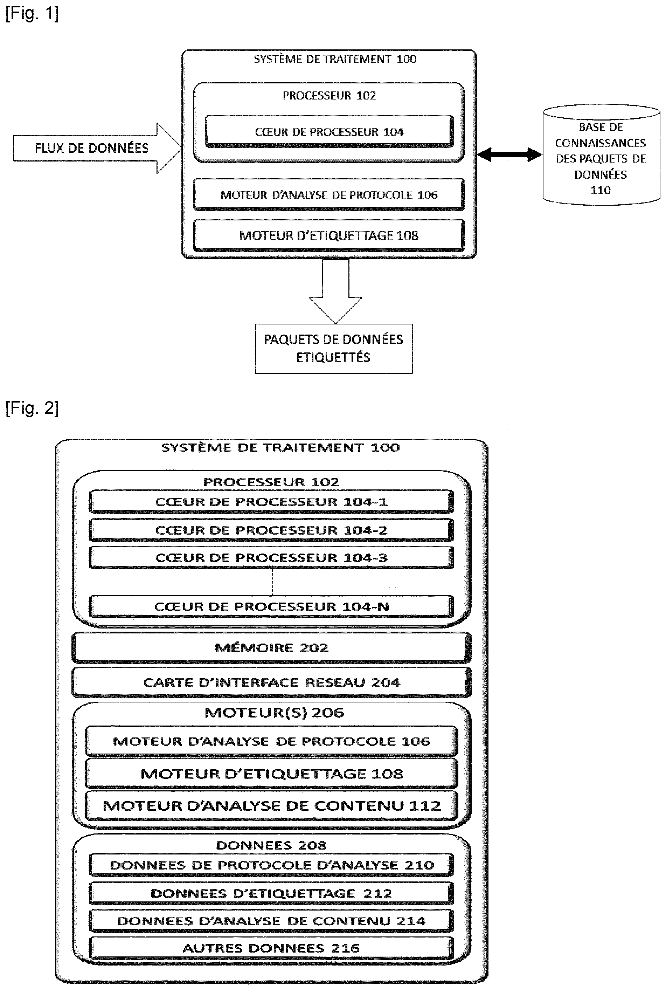

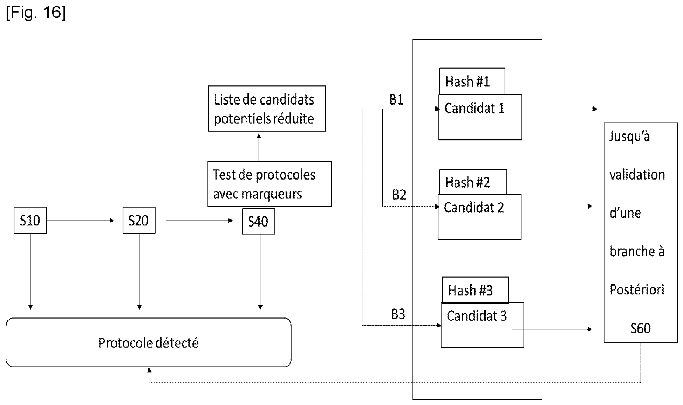

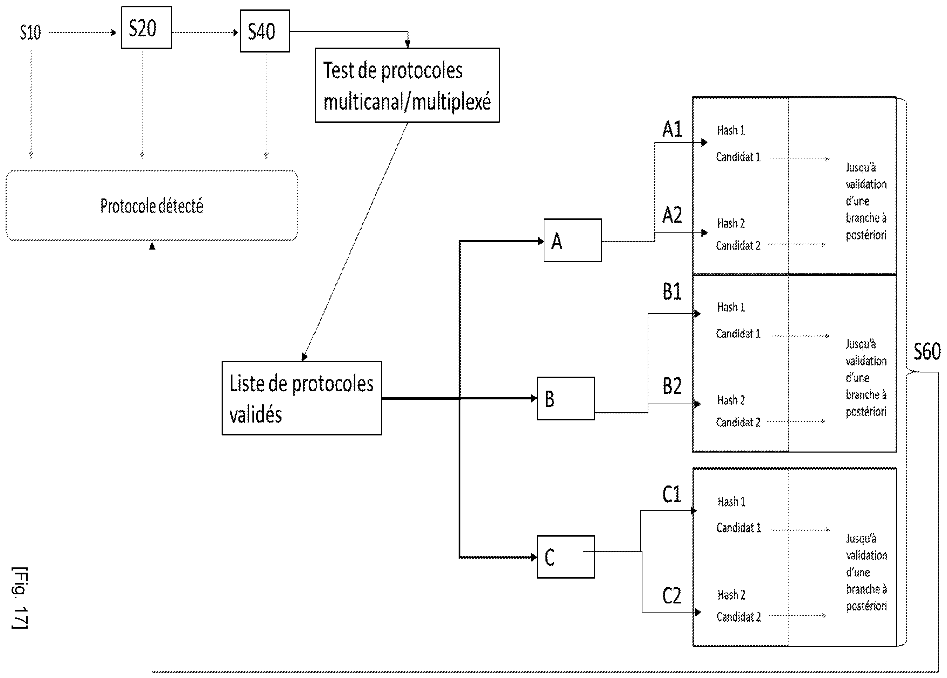

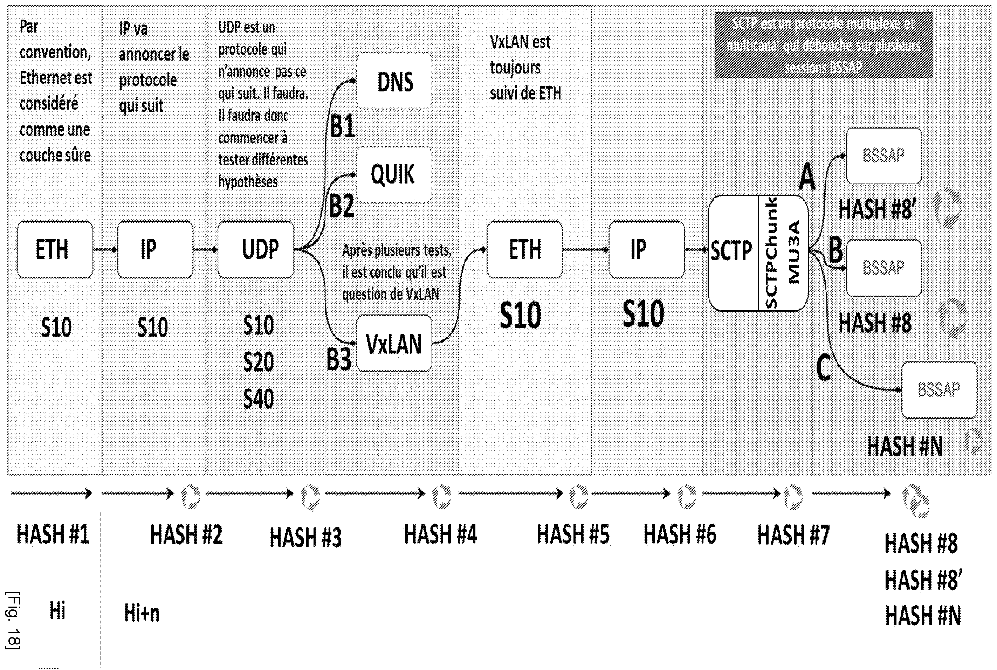

Les techniques ci-dessus sont décrites plus en détail en référence aux figures 1 à 18. Il convient de noter que la description et les chiffres ne font qu'illustrer les principes du présent objet ainsi que les exemples décrits dans le présent document et ne doivent pas être interprétés comme une limitation au présent objet. Il est donc entendu que divers arrangements peuvent être conçus qui, bien qu'ils ne soient pas explicitement décrits ou montrés dans le présent document, les énoncés ci-après faisant état de principes, d'aspects et de mises en œuvre du présent objet, ainsi que des exemples spécifiques de ceux-ci, sont destinés à englober des équivalents de ceux-ci.

La figure 1 illustre un système informatique 100 pour l'analyse d'un flux de données de paquets de données reçus via un réseau de communication (non illustré), conformément à un exemple de la présente invention. Le système informatique 100 peut être soit un ordinateur autonome, soit une combinaison de plusieurs systèmes informatiques fonctionnant ensemble dans un environnement informatique distribué. Des exemples de système informatique 100 peuvent inclure, sans s'y limiter, les ordinateurs de bureau, les ordinateurs portables et les smartphones, ainsi que les assistants numériques personnels (PDA).

Le réseau de communication peut être un réseau sans fil ou câblé, ou une combinaison de ceux-ci. Le réseau de communication peut être un ensemble de réseaux individuels, interconnectés les uns aux autres et fonctionnant comme un seul grand réseau. Des exemples de tels réseaux individuels comprennent, sans toutefois s'y limiter, le réseau du Système mondial de communication mobile (GSM), le réseau du Système universel de télécommunications mobiles (UMTS), le réseau LTE (Long Term Evolution), le réseau de services de communications personnelles (PCS), le réseau d'accès multiple par répartition dans le temps (AMRC), le réseau CDMA (Code-Division Multiple Access), le réseau de nouvelle génération (NGN), le réseau téléphonique public commuté (RTPC) et le réseau numérique à intégration de services (RNIS). Selon la terminologie, le réseau de communication comprend diverses entités de réseau, telles que des passerelles et des routeurs ; toutefois, ces détails ont été omis pour maintenir la brièveté de la description.

Il convient de noter que, bien que les dispositions suivantes soient fournies en ce qui concerne le système informatique 100, les exemples de mise en œuvre de la présente invention peuvent également être mis en œuvre sur divers dispositifs ou réseaux utilisés par un fournisseur de services de réseau, fournissant une connectivité réseau à un ou plusieurs abonnés, tels que des organisations gouvernementales, des sociétés multinationales, des sociétés, des entreprises et d'autres établissements. Le fournisseur de services de réseau peut servir de canal de connexion entre le réseau de communication et les dispositifs informatiques de ses abonnés. Il convient de noter que le fournisseur de services de réseau peut mettre en œuvre divers autres équipements, dispositifs, nœuds de réseau interconnectés par une ou plusieurs liaisons de réseau câblées ou sans-fil pour fournir une connectivité réseau aux abonnés. Les nœuds du réseau peuvent généralement inclure des commutateurs, des routeurs, des points d'accès et des liaisons de données qui peuvent faciliter la communication entre divers hôtes d'abonnés (par exemple, des ordinateurs serveur, des ordinateurs clients, des appareils mobiles, etc.) qui peuvent produire et consommer du trafic de données. Dans un autre exemple, les exemples peuvent être mis en œuvre sur divers périphériques réseau utilisés par des établissements / organisations individuels, fournissant une connectivité et une sécurité réseau à un ou plusieurs de ses utilisateurs.

En référence aux figures 1 à 18, le système informatique 100 peut inclure un processeur 102, lorsque le processeur 102 comprend au moins un cœur de traitement 104. Le système informatique 100 peut en outre comprendre un moteur d'analyse de protocole 106 et un moteur d'étiquetage 108. Dans un exemple, le moteur d'analyse de protocole 106 et le moteur d'étiquetage 108 peuvent être exécutables sur au moins un cœur de traitement 104.

Le terme « moteur d'analyse 106 » sera utilisé pour désigner le terme « moteur d'analyse de protocole 106 ».

Le processeur 102 comprend au moins un cœur de traitement 104 configuré pour traiter un nombre prédéterminé de paquets de données par minute et un moteur d'analyse de protocole 106 sur au moins un cœur de traitement 104.

Dans un exemple d'implémentation, le moteur d'analyse de protocole 106 analyse le flux de données comprenant des lots de paquets définis chacun par une chaine de protocoles de communication rattachée à au moins une session. Ledit moteur d'analyse de protocole 106 est configuré pour analyser le premier protocole Pi d'une chaine de protocoles de communication selon une classification par détection explicite S10, S11, S12, S13 pour vérifier si ledit premier paquet Pi annonce le protocole de communication du paquet de données suivant Pi+1 de la chaîne de protocoles.

En cas d'annonce, le protocole du paquet suivant, ainsi annoncé, est identifié S 100.

En cas de non-annonce, le moteur d'analyse 106 est propre à analyser le paquet suivant Pi+1 pour vérifier s'il est attaché à une chaine de protocoles connue et stockée dans la base de données dynamique BDDS comprenant des chaines de protocoles déjà identifiées, selon une classification par détection de session S20, S21, S22.

Le moteur d'analyse de protocole 106 est configuré pour appliquer une méthode de classification par détection de session S20 consistant à vérifier si le protocole Pi+1 est attaché à une chaine de protocoles connue selon un arbre de décision dynamique par interrogation d'une base de données dynamique de session BDDS comprenant des chaines de protocoles identifiées.

En pratique, le système informatique 100 est, en outre, couplé à la base de données de connaissances 110 sur les paquets de données comprenant un étage dynamique BDDS propre à stocker les sessions, comme on le décrira plus en détail ci-après, et un étage BDC propre à stocker des connaissances relatives aux protocoles. Il convient de noter que si la base de données de connaissances 110 sur les paquets de données a été illustrée comme ainsi distincte du système informatique 100, la base de données de connaissances 110 sur les paquets de données peut également être hébergée dans le système informatique 100 en fonction de ses capacités.

En cas d'attache, les protocoles de la chaine de protocole connue sont identifiés (étape S100), le protocole Pi+1 est identifié, et le moteur d'analyse 106 est apte à analyser le protocole Pi+2 par répétition des étapes de classification par détection explicite S10, de classification par détection de session S20.

En cas de non-attache, le moteur d'analyse 106 est apte à analyser le protocole suivant Pi+1 selon une classification par inspection profonde de paquet S40, S42, S44, S46.

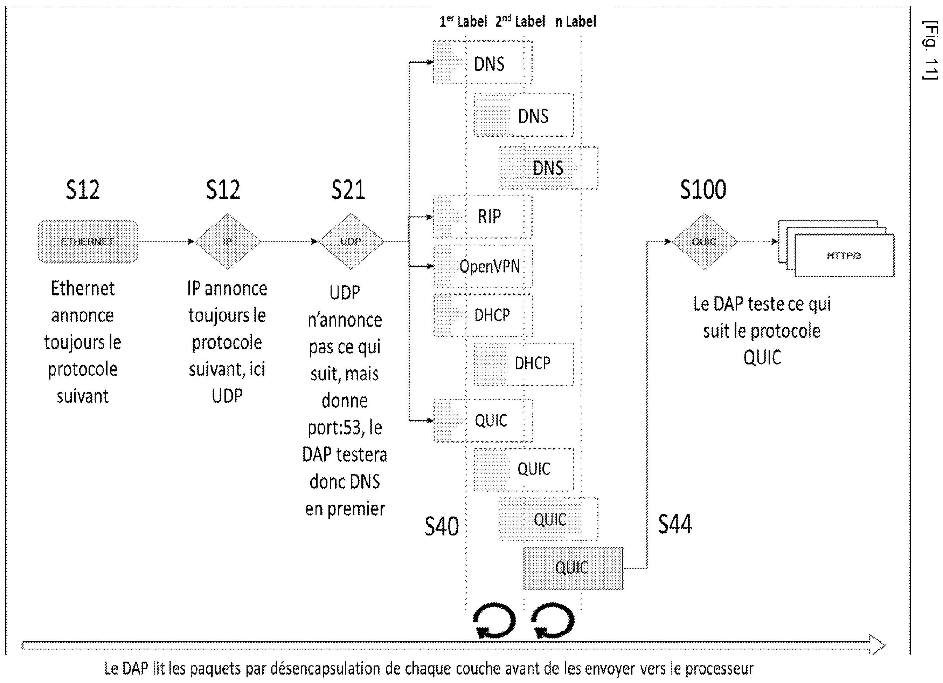

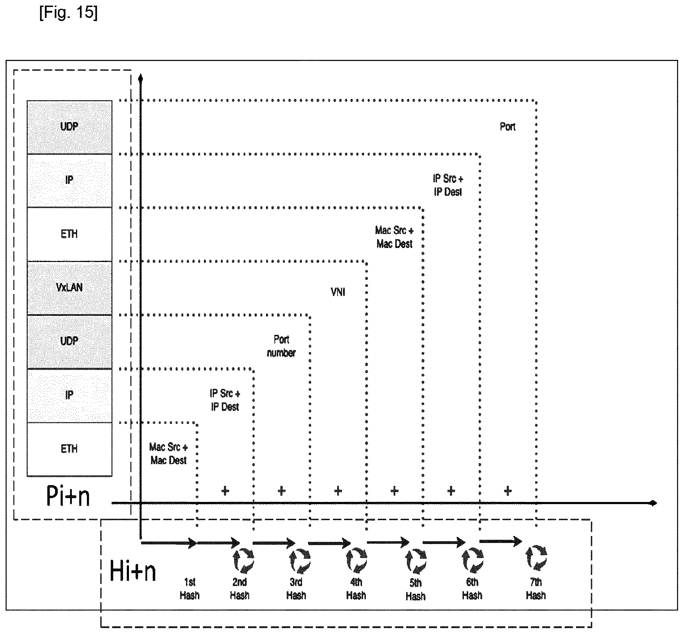

Selon une classification par inspection profonde de paquet S40, le moteur d'analyse 106 est configuré pour identifier le protocole de communication du paquet Pi+1 selon un arbre de décision dynamique corrélé à une base de données de connaissances BDC comprenant des paramètres d'analyse de protocoles et une base de marqueurs spécifiques, aussi appelés labels (voir figure 11 et figure 15) à chaque protocole connu.

En cas de défaut d'identification du protocole Pi+1, le moteur d'analyse 106 est apte à émettre une liste de candidats de protocoles potentiels à prendre en compte selon au moins deux branches de détection possible, chaque détection étant rattachée à une sous-session déterminée pour analyser le ou les protocoles suivants Pi+n avec n>_2 par répétition des analyses selon la classification par détection explicite S10, par détection de session S20, et par inspection profonde de paquet S40 jusqu'à identifier au moins un protocole dont l'identité est certaine.

En cas d'identification d'un protocole Pi+n dont l'identité est certaine par le moteur d'analyse 106, sur une branche de détection, ledit moteur d'analyse 106 est apte à valider rétroactivement S60 la branche de détection, et à écarter les autres branches de détection restantes non validées.

En cas d'absence d'identification d'un protocole Pi+n dont l'identité est certaine sur une branche de détection, le moteur d'analyse 106 est apte à classifier le protocole Pi+1 comme inconnu S60 rétroactivement et continuer l'analyse des paquets de données suivants.

Le moteur d'analyse de protocole 106 est en outre apte à calculer une empreinte numérique de session Hi+n à partir d'une fonction de hachage choisie après chaque étape de classification S10, S20, S40, ladite empreinte numérique Hi+n étant calculée sur la base du premier protocole identifié, et sur l'empreinte numérique précédemment calculée Hi+n-1 de la chaîne de protocoles déjà identifiée sans prise en compte du contenu attaché ou payload.

Chaque empreinte numérique Hi+n est ainsi calculée sur la base de paramètres ou tuple choisis et spécifiques à chaque type de protocole, chaque type de protocole disposant d'un nombre propre de tuple défini, soit n-Tuples.

Pour chaque protocole, un choix des paramètres pertinents est fait de manière dynamique, permettant ainsi de gérer les sessions complètes hors TCP/UDP.

Le moteur d'analyse 106 est ensuite apte à enregistrer l'empreinte numérique de session Hi+n calculée après chaque étape d'identification de protocole suivant l'étape S40 ou après l'étape de validation rétroactive S60, dans une table de hash intégrée dans la base de données dynamique de session BDDS, chaque empreinte numérique Hi+n étant liée à au moins une session choisie, lesdites empreintes numériques Hi+n calculées après chaque étape de classification de chaque protocole par inspection profonde de paquet S40 étant apte à être mise à jour rétroactivement en cas d'identification retardée d'un protocole selon l'étape de vérification S60.

En pratique, lorsque le moteur d'analyse 106 n'identifie pas un protocole Pi+1, et émet une liste de candidats de protocoles potentiels à prendre en compte selon au moins deux branches de détection possible B1, B2 pour détection retardée, chaque détection étant rattachée à une sous-session déterminée pour analyser le ou les protocoles suivants Pi+n avec n>_2 par répétition des analyses selon la classification par détection explicite S10, par détection de session S20, et par inspection profonde de paquet S40 jusqu'à identifier au moins un protocole dont l'identité est certaine, le moteur d'analyse 106 calcule une empreinte numérique de session Hi+n à partir d'une fonction de hachage choisie, pour chaque branche de détection B1, B2 étant rattachée à une sous-session déterminée pour analyser le ou les protocoles suivants Pi+n.

Les empreintes numériques de session Hi+n ainsi calculées permettent l'identification a posteriori d'un ou plusieurs protocoles préalablement non identifiés, même si la détection de la session nécessite plusieurs paquets, la table de hash pourra être remise à jour pour prendre en compte ces nouveaux éléments et ainsi ne jamais perdre un seul paquet ou données associées.

En outre, le moteur d'analyse 106 enregistre l'empreinte numérique de session Hi+n de chaque branche de détection B1, B2 rattachée à une chaine de protocole, l'enregistrement étant configuré pour attribuer un identifiant unique à chaque branche de détection.

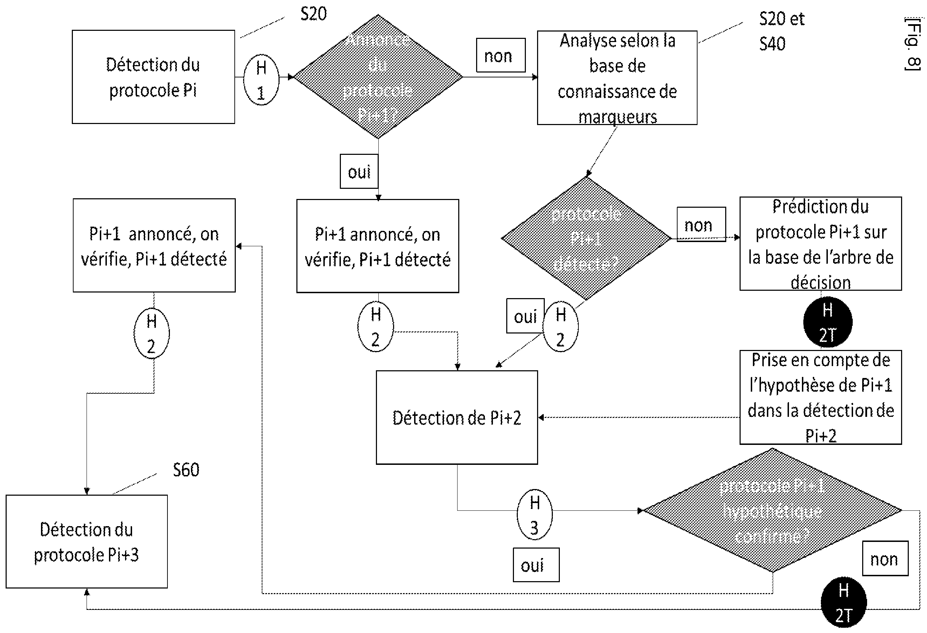

En référence à la figure 8, à titre d'exemple, les empreintes numériques H1, H2, et H3 sont calculées respectivement après identification des protocoles Pi, Pi+1 et Pi+2 de la chaîne de protocole, et lorsque la classification selon une inspection profonde de paquets S40 échoue à identifier le protocole Pi+1, une empreinte numérique H2T est calculée, et dans le cas où l'identification du protocole Pi+3 valide la chaine de protocole, et que Pi+1 peut être déduit, alors, Pi+1 est validé et l'empreinte numérique H2T est mise à jour par calcul et enregistrement d'une nouvelle empreinte numérique H2.

Selon un mode de réalisation particulier de l'invention, le moteur d'analyse 106, en cas de détection de protocoles tunnelés, multiplexés, ou multicanaux détectés de manière certaine, est apte à générer au moins une branche de détection A1, A2, B1, B2, C1, C2 par protocole vérifié à prendre en compte pour la détection ultérieure.

Pour chaque branche de détection générée A1, A2, B1, B2, C1, C2, le moteur d'analyse 106 calcule une empreinte numérique de session Hi+n à partir d'une fonction de hachage choisie, chaque branche de détection étant rattachée à une sous-session déterminée pour analyser le ou les protocoles suivants Pi+n ; et
- Enregistre l'empreinte numérique de session Hi+n de chaque branche de détection rattachée à une chaine de protocole, l'enregistrement étant configuré pour attribuer un identifiant unique à chaque branche de détection du/des protocoles tunnelés, multiplexés ou multicanaux détectés.

Avantageusement, le hash calculé évolue à mesure que le paquet de données est lu, permettant de pouvoir faire analyser et détecter tous les protocoles avec une seule sonde (c'est-à-dire les enchainements simples, complexes, tunnelés, multicanaux et multiplexés), et grâce à cette répétition de calcul de hash, sur chaque couche, chacun des identifiants est réellement unique, peu importe la longueur de la chaine de protocoles qui compose le ou les paquets.

Le système 100 comprend, en outre, le moteur d'étiquetage 108, propre à associer une étiquette aux paquets de données en fonction des protocoles ainsi identifiés.

Le moteur d'analyse 106 est apte à enregistrer l'état de session si la session courante est inconnue avec une empreinte numérique calculée avec n-tuples S31, 32 et S33.

La figure 2 illustre les schémas du système informatique 100 pour l'analyse du flux de données des paquets de données reçus via le réseau de communication, conformément à un exemple de mise en œuvre de la présente invention.

Comme déjà décrit, le système informatique 100 peut inclure le processeur 102, ou le processeur 102 peut inclure plusieurs cœurs de traitement 104-1, 104-2, 104-3, ..., 104-n. Les fonctions du bloc fonctionnel étiqueté comme « processeur(s) », peuvent être fournies par l'utilisation de matériel dédié ainsi que de matériel capable d'exécuter des instructions. Lorsqu'elles sont fournies par un processeur, les fonctions peuvent être fournies par un seul processeur dédié, par un seul processeur partagé ou par une pluralité de processeurs individuels, dont certains peuvent être partagés. En outre, l'utilisation explicite du terme « processeur » ne serait pas interprétée comme se référant exclusivement au matériel capable d'exécuter des instructions et peut implicitement inclure, sans s'y limiter, le matériel de processeur de signal numérique (DSP), le processeur réseau, le circuit intégré spécifique à l'application (ASIC), le FPGA (field programmable gate array), la mémoire en lecture seule (ROM) pour le stockage des instructions, la mémoire vive (RAM), le stockage non volatil. D'autres matériels, standard et/ou personnalisés, peuvent également être inclus.

Le système informatique 100 peut en outre inclure une mémoire 202 couplée au processeur 102, où la mémoire 202 peut inclure tout support lisible par ordinateur, y compris, par exemple, la mémoire volatile (par exemple, la RAM) et/ou la mémoire non volatile (par exemple, EPROM, mémoire flash, etc.).

En outre, le système informatique 100 peut inclure une carte d'interface réseau (NIC) 204 couplée au processeur 102 et à la mémoire 202. La carte réseau 204 peut être un composant intégré du système informatique 100 ou peut être un composant séparé, couplé à l'extérieur au système informatique 100.

Le système informatique 100 peut, en outre, inclure les moteurs 206, ou les moteurs 206 peuvent inclure le moteur d'analyse de protocole 106, le moteur d'étiquetage 108 et le moteur d'analyse de contenu 112. Dans un exemple, les moteurs 206 peuvent être implémentés comme une combinaison de matériel et de firmware. Dans les exemples décrits ici, de telles combinaisons de matériel et de micrologiciels peuvent être mises en œuvre de plusieurs manières différentes. Par exemple, le micrologiciel du moteur peut être des instructions exécutables du processeur, stockées sur un support de stockage non transitoire, lisible par machine et le matériel du moteur peut inclure une ressource de traitement (par exemple, implémentée en tant que processeur unique ou une combinaison de plusieurs processeurs) pour exécuter ces instructions.

Dans les présents exemples, le support de stockage lisible par machine peut stocker des instructions qui, lorsqu'elles sont exécutées par la ressource de traitement, implémentent les fonctionnalités du moteur. Dans de tels exemples, le système informatique 100 peut inclure le support de stockage lisible par machine stockant les instructions et la ressource de traitement pour exécuter les instructions. Dans d'autres exemples du présent sujet, le support de stockage lisible par machine peut être situé à un endroit différent, mais accessible au système informatique 100 et au processeur 102.

Le système informatique 100 peut, en outre, inclure les données 208, qui servent, entre autres, de référentiel pour stocker des données qui peuvent être récupérées, traitées, reçues ou générées par le moteur d'analyse de protocole 106, le moteur d'étiquetage 108 et le moteur d'analyse de contenu 112. Les données 208 peuvent inclure les données d'analyse de protocole 210, les données d'étiquetage 212, les données d'analyse de contenu 214 et d'autres données 216. Dans un exemple, les données 208 peuvent être stockées dans la mémoire 202.

Dans un exemple d'implémentation, la carte réseau 204 peut recevoir le flux de données des paquets de données via le réseau de communication. La carte réseau 204 peut séparer le flux de données en plusieurs files d'attente RX de traitement et allouer chaque file d'attente de traitement à au moins un cœur de traitement 104-1, 104-2, 104-3, ..., 104-n. Dans un exemple, la carte réseau 204 peut séparer le flux de données dans les files d'attente de traitement multiples en fonction de l'algorithme RSS (Receive Side Scaling) mise à l'échelle côté réception. Un tel algorithme permet de distribuer des paquets sur plusieurs files d'attentes Psa, Psb (queues de réception). Il existe plusieurs algorithmes de distribution, le plus utilisé se nomme « Toeplitz » de microsoft (marque déposée).

Il convient de noter que chacun des multiples cœurs de traitement 104-1, 104-2, 104-3, ..., 104-n peut permettre d'exécuter différentes instances des multiples moteurs sur ceux-ci. Par exemple, des instances distinctes du moteur d'analyse de protocole 106, du moteur d'étiquetage 108 et du moteur d'analyse de contenu 112 peuvent être exécutées en parallèle sur chacun des cœurs de traitement 104-1, 104-2, 104-3, ..., 104-n. Toutefois, pour faciliter la compréhension, l'exemple d'implémentation suivant a été expliqué en ce qui concerne un seul cœur de traitement 104-1 du processeur 102, ci-après dénommé le cœur de traitement 104.

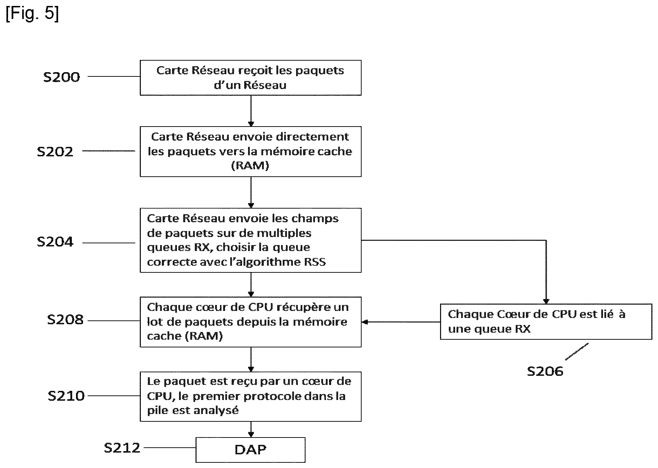

En référence à la figure 5, on a représenté un exemple de réception et de distribution des paquets.

La carte réseau 204 reçoit les paquets selon l'étape S200.

Selon l'étape S202 la carte réseau envoie directement les paquets vers la mémoire cache 202.

Selon l'étape S204, la carte réseau envoie les champs des paquets sur de multiples queues RX (files d'attente) et choisit la queue correcte selon l'algorithme RSS (receive side scaling) mise à l'échelle côté réception.

Selon l'étape S206, chaque cœur de CPU est lié à une queue RX.

Selon l'étape S208, chaque cœur de CPU récupère un lot LOT de paquets depuis la mémoire cache (RAM) 202.

Selon l'étape S210, le paquet Pn est reçu par un cœur de CPU, le premier protocole dans la chaine de protocole (ou pile) est analysé selon l'analyse DAP (S212) conforme à l'invention.

Dans un exemple, la base de données de paquets dynamiques de sessions BDDS peut être stockée dans les données d'analyse de protocole 210. Dans un autre exemple, la base de données BDDS peut être incluse dans la base de données de connaissances 110 sur les paquets de données.

Dans cet exemple, en plus de la base de données dynamique de sessions BDDS, la base de données de connaissances de paquets de données 110 peut également inclure une base de données de paquets de données statiques. La base de données statique sur les paquets de données peut inclure des marqueurs basés sur une connaissance empirique des caractéristiques des protocoles, et dans lesquels la connaissance empirique comprend des moyens algorithmiques de détection de protocoles basés sur des normes sur la localisation, des liens logiques entre les protocoles de communication, les requêtes pour commentaires RFC et les modèles de fréquence des protocoles de communication.

Le moteur d'analyse de protocole 106 peut également stocker le protocole de communication ainsi identifié dans les données d'étiquetage 212. Le moteur d'étiquetage 108 peut alors accéder aux données d'étiquetage 212 et associer une étiquette sur les paquets de données ainsi analysés et dont les protocoles sont ainsi identifiés.

Le moteur d'étiquetage 108 transmet ensuite les paquets de données étiquetés au moteur d'analyse de contenu 112. Le moteur d'analyse de contenu 112 analyse et extrait les paquets de données en fonction de l'étiquette qui leur est associée. Par exemple, le moteur d'analyse de contenu 112 peut analyser et extraire un premier paquet de données avec une étiquette indiquant un premier protocole de communication basé sur le premier protocole de communication. De même, le moteur d'analyse de contenu 112 peut analyser et extraire un deuxième paquet de données avec l'étiquette indiquant un deuxième protocole de communication différemment du premier paquet de données. Le moteur d'analyse de contenu 112 peut ensuite stocker les paquets de données analysés et extraits dans les données d'analyse de contenu 214.

Dans un exemple, le moteur d'analyse de contenu 112 peut analyser et extraire les paquets de données (ou des métadonnées desdits paquets) pour surveiller et visualiser le trafic de données, détecter une réduction de la qualité de service, détecter les cyberattaques et identifier toute incohérence dans la configuration du réseau. Si le moteur d'analyse de contenu 112 détecte l'un des événements mentionnés ci-dessus sur la base de l'analyse et de l'extraction de données, le moteur d'analyse de contenu 112 peut générer un déclencheur indiquant l'occurrence de l'événement lors de l'analyse des données et de l'extraction d'un ensemble de paquets de données du flux de données. Dans une telle situation, l'ensemble des paquets de données peut être stocké pour un traitement ultérieur. Dans un exemple, l'ensemble des paquets de données peut être stocké dans les autres données 216.

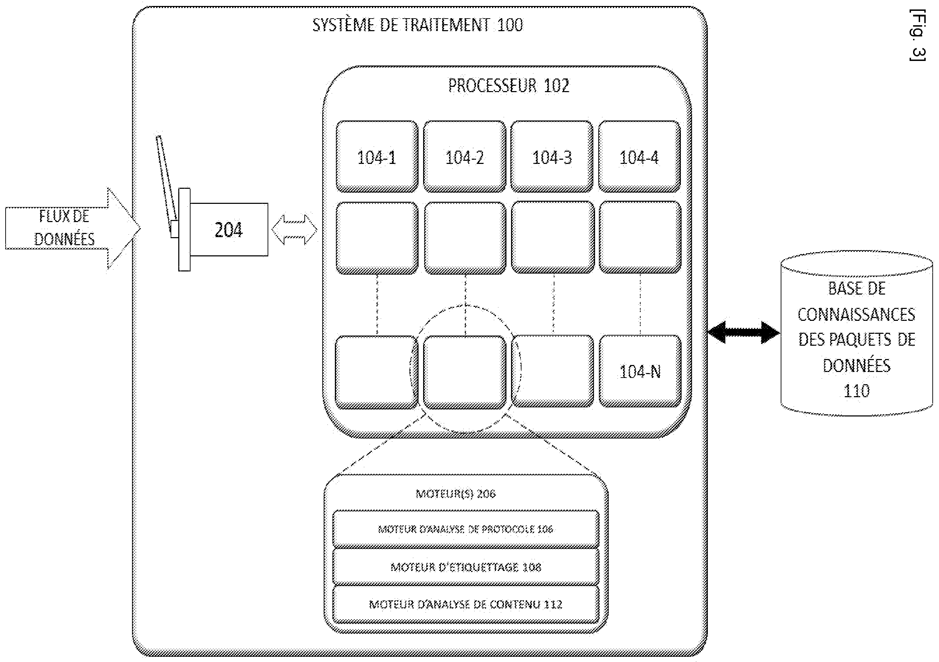

La figure 3 illustre le système informatique 100, conformément à un autre exemple de mise en œuvre de la présente invention. Comme déjà décrit, le système informatique 100 peut inclure le processeur 102 ayant plusieurs cœurs de traitement 104-1, 104-2, 104-3, ..., 104-n. Le système informatique 100 peut, en outre, inclure la carte réseau 204 couplée au processeur 102 et les multiples cœurs de traitement 104-1, 104-2, 104-3, ..., 104-n qui y sont inclus. En outre, chacun des cœurs de traitement multiples 104-1, 104-2, 104-3, ..., 104-n peut permettre d'exécuter des instances distinctes du moteur d'analyse de protocole 106, du moteur d'étiquetage 108 et du moteur d'analyse de contenu 112. En outre, le système informatique 100 peut être couplé à la base de données de connaissances sur les paquets de données 110.

Le moteur d'analyse de contenu 112, exécuté sur le cœur de traitement 104-1, peut ensuite analyser et extraire le premier paquet de données en fonction de l'étiquette de données qui lui est associée.

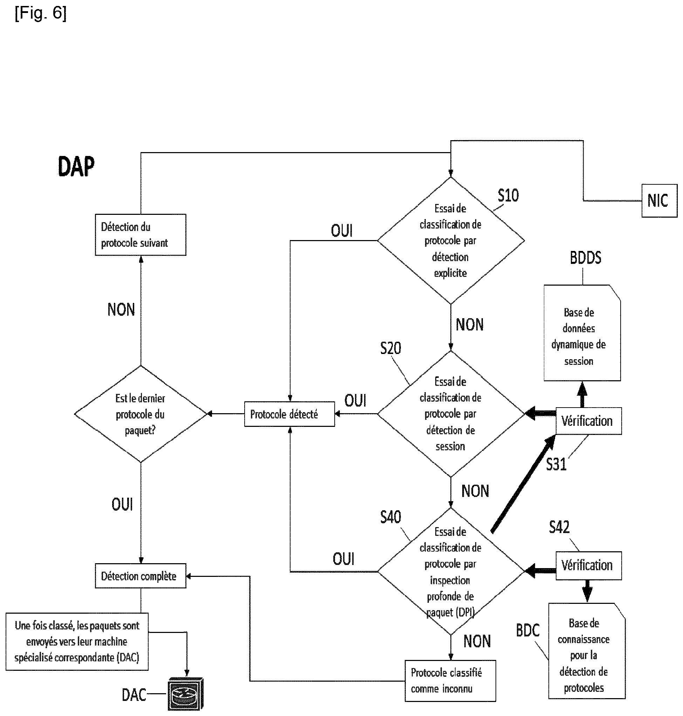

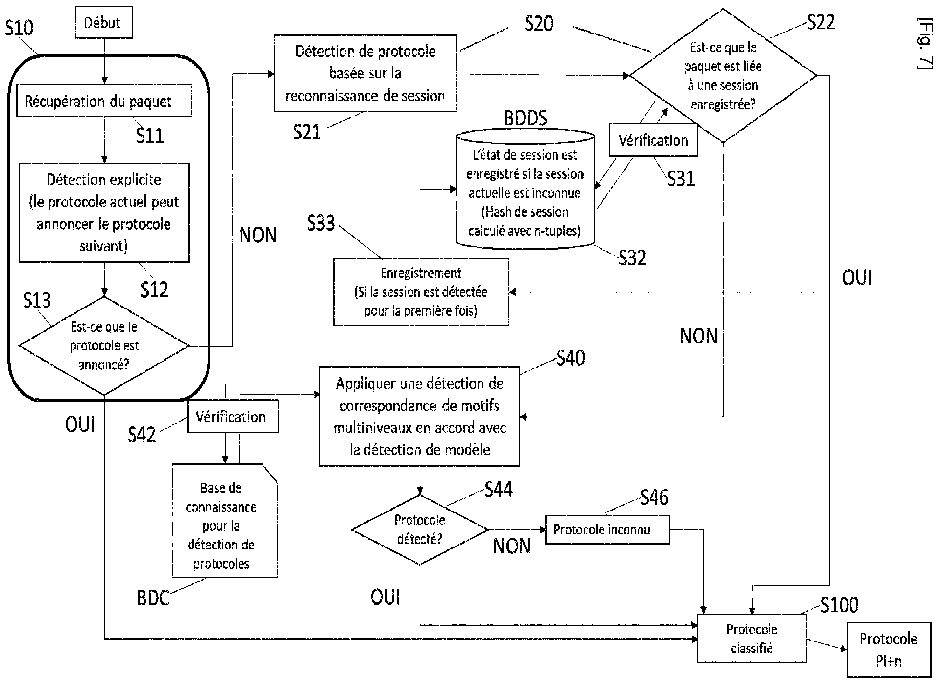

Dans un exemple, le moteur d'analyse de protocole 106 et le moteur d'analyse de contenu 112 peuvent effectuer de manière séquentielle l'analyse de protocole DAP comme illustrée en figures 6 et 7, suivie de l'analyse et de l'extraction de données DAC pour le flux de données reçu via le réseau de communication. Par exemple, une fois que le moteur d'analyse de protocole 106 a identifié le protocole de communication pour le premier paquet de données, le premier paquet de données peut être étiqueté et transmis au moteur d'analyse de contenu 112 pour l'analyse et l'extraction de données.

En alternative, alors que le moteur d'analyse de contenu 112 effectue l'analyse et l'extraction de données sur le premier paquet de données Pn, le moteur d'analyse de protocole 106 peut simultanément commencer à exécuter l'analyse DAP pour un deuxième paquet de données Pn+1 suivant le premier paquet de données dans le flux de données Pn.

En pratique, l'exécution de l'analyse DAP peut être suivie de manière séquentielle par l'analyse et de l'extraction DAC des données pour les paquets de données sur un seul cœur de traitement du processeur.

En alternative, l'analyse DAP et de l'extraction DAC des données qui suit l'analyse DAP peut être traitée en parallèle sur un ou plusieurs cœurs ou machines dédiées, ce qui facilite l'évolutivité pour gérer un flux plus élevé de données reçues du réseau de communication. Ainsi, les techniques décrites ci-dessus peuvent faciliter le traitement des flux de données ayant un trafic de données supérieur à 100 Gbps.

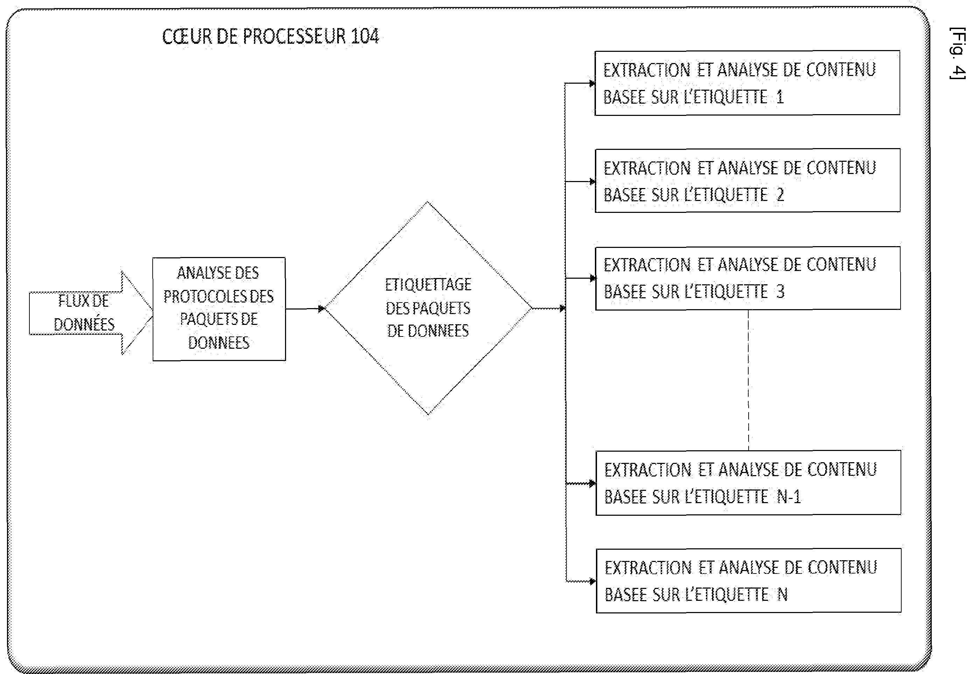

Dans un autre exemple, comme illustré à la figure 4, une instance du moteur d'analyse de protocole 106 ainsi que plusieurs instances du moteur d'analyse de contenu 112 peuvent être exécutées sur le cœur de traitement 104-1. Autrement dit, une fois que le moteur d'analyse de protocole 106 a effectué l'analyse DAP sur les paquets de données du flux de données et identifié le protocole de communication pour les paquets de données, le noyau de traitement 104-1 peut permettre l'exécution parallèle de plusieurs instances du moteur d'analyse de contenu 112 pour traiter des paquets de données basés sur différentes étiquettes associées aux paquets de données, les différentes étiquettes étant associées en fonction du protocole de communication identifié pour les paquets de données du flux de données.

En pratique, un seul cœur de processeur traite de manière consécutive l'analyse de protocole DAP suivie de l'analyse et extraction de contenu DAC.

Dans une optique de scalabilité, il est possible de dédier des cœurs, des processeurs complets ou des machines dédiées dont l'objectif est de faire tourner plusieurs DAC, dans le cas où l'analyse et l'extraction des métadonnées sont trop lourds pour être fait sur un seul cœur de processeur

De cette manière, plusieurs paquets de données ayant des étiquettes associées différentes peuvent être traités en parallèle par le noyau de traitement 104-1, augmentant ainsi le débit global des paquets de données analysés et extraits par le système informatique 100 dans un laps de temps donné.

En alternative, la conception d'une solution basée sur un traitement asynchrone, en deux temps, des paquets (DAP d'une part et DAC d'autre part) permet une cassure physique, en séparant le traitement DAP du traitement DAC (ici le traitement DAC est à la suite du traitement DAP pour le même paquet de données). Sur la base des besoins requis par l'utilisateur, les ressources allouées aux DAC peuvent se trouver congestionnées. Cette cassure permet alors de dédier certains cœurs à un travail unique du DAC. Au-delà des cœurs d'un seul processeur CPU, il est alors possible de dédier des Processeurs complets au DAC, voire même des machines entières.

En référence aux figures 6 à 18, l'invention porte également sur un procédé d'analyse d'un flux de données de paquets de données reçus via un réseau de communication, le flux de données comprenant des lots de paquets définis chacun par une chaine de protocoles de communication rattachés à au moins une session.

Le procédé selon l'invention comprend une analyse de protocoles DAP selon une première étape d'analyse du premier protocole Pi d'une chaine de protocoles de communication selon une étape de classification par détection explicite S10 configurée pour vérifier si le premier protocole Pi annonce le protocole de communication suivant Pi+1 de la chaine de protocoles.

En pratique, en cas d'annonce, le protocole suivant Pi+1 ainsi annoncé est identifié, tandis qu'en cas de non-annonce, le procédé selon l'invention est configuré pour analyser le protocole suivant Pi+1 selon une étape de classification par détection de session S20.

L'étape de classification par détection de session S20 conforme à l'invention est configurée pour vérifier si le protocole Pi+1 est attaché à une chaine de protocoles connue selon un arbre de décision dynamique par interrogation d'une base de données dynamique de session BDDS comprenant des chaines de protocoles identifiées.

Selon un mode de réalisation de l'invention, après identification d'un protocole lors de l'étape de classification par détection de session S20, la base de données dynamique de session BDDS est mise à jour.

En cas d'attache, le protocole Pi+1 est identifié, et le protocole Pi+2 est analysé par répétition des étapes de classification par détection explicite S10, de classification par détection de session S20.

Alternativement, en cas de non-attache, le protocole Pi+1 est analysé selon une étape de classification par inspection profonde de paquet S40.

L'étape de classification par inspection profonde de paquet S40 est configurée pour identifier le protocole de communication du paquet Pi+1 selon un arbre de décision dynamique corrélé à une base de données de connaissances BDC comprenant des paramètres d'analyse de protocoles et une base de marqueurs spécifiques à chaque protocole connu.

En pratique, en cas de détection des marqueurs spécifiques d'un protocole testé, le protocole Pi+1 est alors identifié.

Selon un mode de réalisation de l'invention, après identification d'un protocole lors de l'étape de classification par inspection profonde de paquets S40, la base de données dynamique de session BDDS est mise à jour.

Alternativement, en cas de défaut d'identification du protocole Pi+1, le procédé selon l'invention comprend une sous-étape d'émission d'une liste de candidats de protocoles potentiels pour Pi+1, à prendre en compte selon au moins deux branches de détection B1, B2, chaque détection étant rattachée à une sous-session déterminée pour analyser le ou les protocoles suivants Pi+n avec n>_2 par répétition des étapes de classification par détection explicite S10, de classification par détection de session S20, et de classification par inspection profonde de paquet S40 jusqu'à identifier au moins un protocole dont l'identité est certaine.

En d'autres termes, une branche de détection B1, B2 sera générée sur la base d'une hypothèse d'un protocole potentiel donné, et l'identification de protocole Pi+n après Pi+1 sera mise en œuvre par répétition des étapes de classification S10, S20 et S40.

Si un protocole Pi+n dont l'identité est certaine est identifié sur une branche de détection B1, B2, la branche de détection B1, B2 sera rétroactivement validée, et les branches de détection restantes non validées seront écartées.

Selon un mode de réalisation de l'invention, après identification d'un protocole lors des étapes de classification par détection de session S20 et classification par inspection profonde de paquets S40, ou par identification a posteriori, la base de données dynamique de session BDDS est mise à jour.

Dans le cas ou l'identification d'un protocole Pi+n dont l'identité est certaine n'est pas possible sur une branche de détection, le protocole Pi+1 est alors classifié comme inconnu S60 rétroactivement.

Avantageusement, la mise à jour de la base de données dynamique de session BDDS permet une accélération du procédé d'identification, et de limiter les protocoles étiquetés comme inconnus.

Le procédé comprend, en outre, une étape d'étiquetage comprenant l'association d'une étiquette aux paquets de données en fonction de chaque session pour lesquels les protocoles ont été identifiés.

Le procédé selon l'invention comprend, en outre, après chaque étape de classification S10, S20, S40, une étape de calcul d'une empreinte numérique de session Hi+n à partir d'une fonction de hachage choisie, ladite empreinte numérique Hi+n étant calculée sur la base du premier protocole identifié, et sur l'empreinte numérique précédemment calculée Hi+n-1 de la chaine de protocoles déjà identifiée sans prise en compte du contenu attaché.

En pratique, chaque empreinte numérique Hi+n est calculée sur la base de paramètres ou tuples dynamiques choisis et spécifiques à chaque type de protocole, chaque type de protocole disposant d'un nombre propre de marqueurs définit aussi appelés n-Tuples.

A titre d'exemple, les marqueurs définit aussi appelés n-Tuples peuvent non limitativement au groupe formé par IP destinataire, IP source, Port destinataire, Port Source, protocole, adresse IP, port, paramètres de qualité de service QoS, Tag de réseau, Volume de la session, taille des paquets, nombre de répétition (retry en anglais), version, type et version de l'algorithme de chiffrement, type de chiffrement, CERT (Computer Emergency Response Team en anglais) du certificat , valeur du SNI (indication du nom du serveur ou Server Name Indication en anglais), Taille des paquets, IP retournée, drapeau d'erreurs (flag error en anglais), nom de domaine, version du client, version du serveur, version d'algorithme de chiffrement, algorithme de compression, horodatage, Version d'IP, nom d'hébergeur (hostname en anglais), durée de bail (lease-time en anglais), URL, agent d'utilisateur, nombre d'octet du contenu attaché, type de contenu, code d'état, entête de cookie, nom du client, service de la requête, valeur du code d'erreur, type de requête, valeur du protocole, horodatage de réponse, niveau de privilège, type et langue du clavier, identification du produit, taille d'écran, ou toute autres métadonnées spécifiques analogues extraites des protocoles dans un ou plusieurs paquets de données de la session validée, métadonnées spécifiques analogues extraites du contenu attaché à un ou plusieurs paquets de données de la session validée

A titre d'exemple conforme à l'invention, chaque protocole peut avec un ensemble de n-tuples spécifique :

**Tableau d'exemples de métadonnées extractibles pour une liste de protocoles choisis.**

| PROTOCOLES | | EXEMPLES DE METADONNEES EXTRAITES |
|---|---|---|
| VLAN et VxLAN | | Tag de réseau |
| MPLS | | Id |
| TCP | | Volume de la session, taille des paquets, nombre de retry |
| TLS | | version, type et version de l'algorithme de chiffrement, CERT du certificat, valeur du SNI |
| DNS | | Taille des paquets, IP retournée, Flag d'erreurs, nom de domaine, rcode |
| SSH | | Version du client, version du serveur, version d'algorithme de chiffrement, algorithme de compression |
| | DHCP | Timestamp, Version d'IP, Adresses IP du serveur, adresse IP de endpoint, le port/protocole d'origine - TCP ou UDP - le hostname du serveur ou du endponit, lease-time,... |
| | HTTP | Url, user-agent, nombre d'octet du payload, content-type, status code, header de cookie, ... |
| | Kerberos | nom du client, service requested, valeur du code d'erreur, type de requête, valeur du protocole, timestamp de réponse, niveau de privilège, type de chiffrement, ... |
| | LDAP | durée de session, nombre de logon-errors, flag de fin de session, code de résultat de query, code d'erreur, ... |
| | RDP | cookie username, type et langue du clavier, version du client, product ID, taille d'écran, ... |

L'étape de calcul d'empreinte numérique Hi+n est suivie d'une étape d'enregistrement de ladite empreinte numérique de session Hi+n calculée après chaque étape d'identification de protocole suivant l'étape S40 ou après l'étape de validation rétroactive S60.

L'enregistrement est effectué dans une table de hash intégrée dans la base de données dynamique de session BDDS, chaque empreinte numérique Hi+n étant liée à au moins une session choisie.

En pratique, les empreintes numériques Hi+n calculées après chaque étape de classification de chaque protocole par inspection profonde de paquet S40 étant apte à être mis à jour rétroactivement en cas d'identification retardée d'un protocole selon l'étape de vérification S60.

En d'autres termes, la table de hash est mise à jour si la détection d'au moins un protocole d'une session nécessite la mise en œuvre d'une détection retardée sur plusieurs paquets S60.

Selon un mode de réalisation de l'invention, en cas de détection de protocoles tunnelés, multiplexés, multicanaux de manière certaine, le procédé selon l'invention comprend une première sous-étape de génération d'au moins une branche de détection A1, A2, B1, B2, C1, C2 par protocole vérifié à prendre en compte pour l'analyse ultérieure.

Selon une seconde sous-étape, chaque branche de détection A1, A2, B1, B2, C1, C2 sera traitée comme une chaine de protocole unique et apte à être analysée, et comprend une sous-étape de calcul d'une empreinte numérique unique de session Hi+n à partir d'une fonction de hachage choisie, rattachée à une sous-session déterminée pour chaque branche de détection A1, A2, B1, B2, C1, C2, et permettant d'analyser le ou les protocoles suivants Pi+n.

Enfin, la détection de protocoles tunnelés, multiplexés, ou multicanaux comprend une dernière sous-étape d'enregistrement de l'empreinte numérique de session Hi+n de chaque branche de détection A1, A2, B1, B2, C1, C2, rattachée à une chaine de protocole, l'étape d'enregistrement étant configurée pour attribuer un identifiant unique à chaque branche de détection A1, A2, B1, B2, C1, C2 du/des protocoles tunnelés, multiplexés, multicanaux, détectés, et ainsi avantageusement ne pas confondre deux sous-sessions pouvant mener à des informations d'analyse erronées.

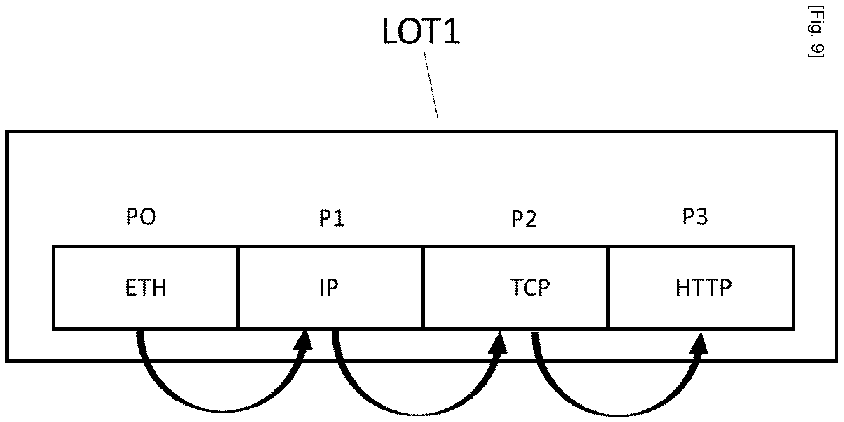

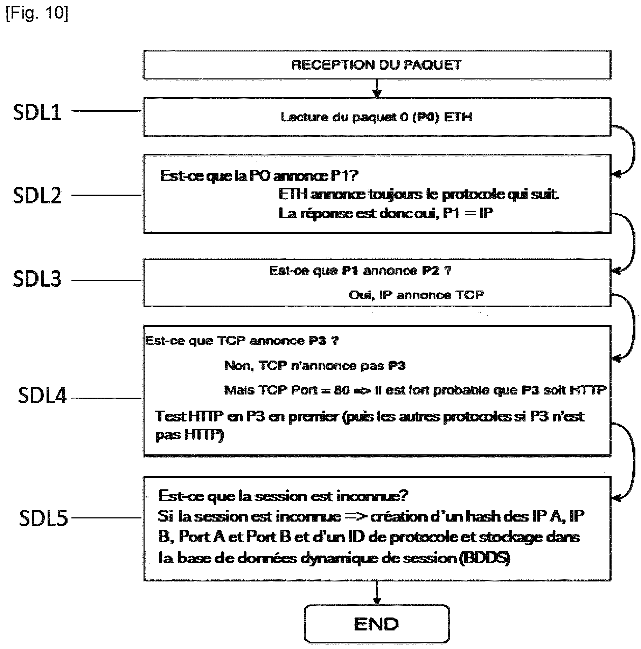

En référence aux figures 9, et 10 est représentée, à titre d'exemple, une implémentation du procédé selon l'invention selon une analyse linéaire conformément à l'invention.

Ici le lot LOT1 comprend quatre paquets individualisés PO, P1, P2, et P3. Le paquet PO supporte le protocole ETHERNET ETH. Le paquet P1 supporte le protocole INTERNET IP. Le paquet P2 supporte le protocole TCP et le paquet P3 supporte le protocole http.

Après réception du lot LOT1 de paquets, le paquet P0 est lu (étape SDL1), ici P0 = ETH. À l'étape SLD2, le moteur d'analyse vérifie si le paquet P0 annonce le protocole du paquet suivant P1. Ici, on sait que ETH annonce toujours le protocole qui suit. Ici P1 = IP.

À l'étape SDL3, le moteur vérifie si le paquet P1 annonce le protocole du paquet suivant P2. Ici on sait qu'IP annonce TCP.

A l'étape SDL4, le moteur vérifie si TCP annonce le protocole du paquet suivant P3. La réponse est négative, mais les connaissances sur les protocoles indiquent que si TCP port = 80 alors il est fort probable que P3 = http. Si le test http en P3 est vérifié ou non, alors la session est connue ou inconnue.

En étape SLD5, si la session est inconnue (par exemple P3 n'est pas http) alors création d'une empreinte numérique des IP de la source A, du destinataire B, des ports A et B et d'un identifiant de protocole. Ensuite la session ainsi reconnue pour la première fois est stockée dans la base de données dynamique de session pour analyse ultérieure.

En référence à la figure 11 on a représenté un exemple d'analyse appliquée à une détection de protocoles linéaire pour laquelle le protocole UDP est identifié, mais n'annonce pas le protocole suivant, le moteur d'analyse 106 mettant en œuvre une analyse selon un classification par détection de session S20 et par inspection profonde S40, dont le port identifié est le port :53, et pour lequel l'un des protocoles les plus probables est le protocole DNS.

Le protocole DNS est identifié comme le plus probable, et sera donc testé par tentative d'identification des marqueurs propres au protocole DNS.

Selon le mode de réalisation, tous les marqueurs (ou labels) pour le protocole DNS ne sont pas retrouvés.

Selon la figure 11, le protocole QUIC est identifié à l'aide de ses marqueurs propres par le moteur d'analyse 106.

En pratique, l'identification des protocoles probables et leurs tests en cas d'échec d'identification sont répétés jusqu'à ce qu'une limite du nombre de tests choisis soit atteinte.

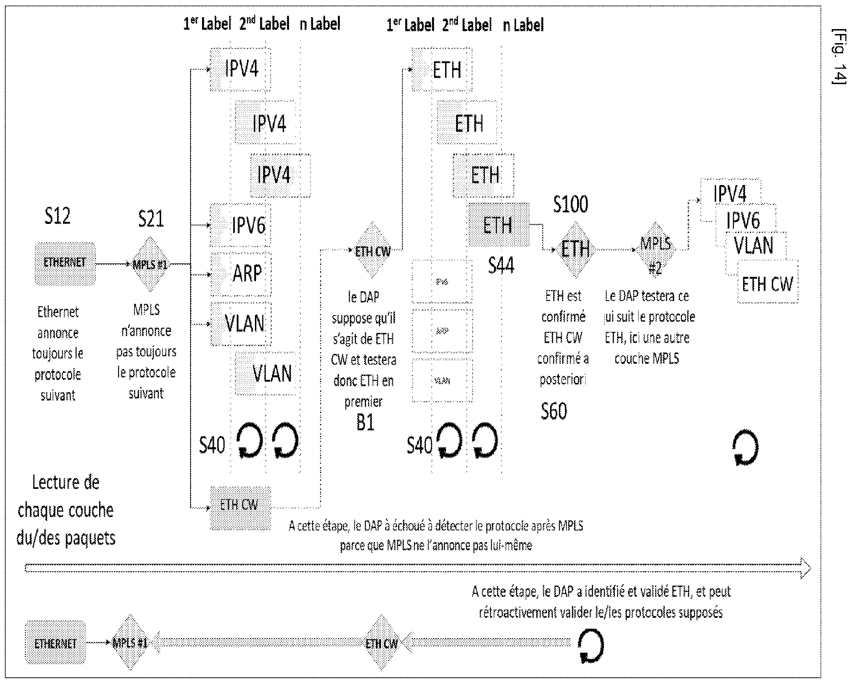

En référence à la figure 14, on a représenté un second exemple d'analyse appliquée à une détection de protocoles linéaire à identification a posteriori pour laquelle le protocole MPLS est identifié sur une chaine de protocole, mais n'annonce pas le protocole suivant,

L'analyse par classification par inspection profonde S40 ne permet pas d'identifier le protocole associé si le protocole ne comprend pas de marqueurs suffisants pour être identifié.

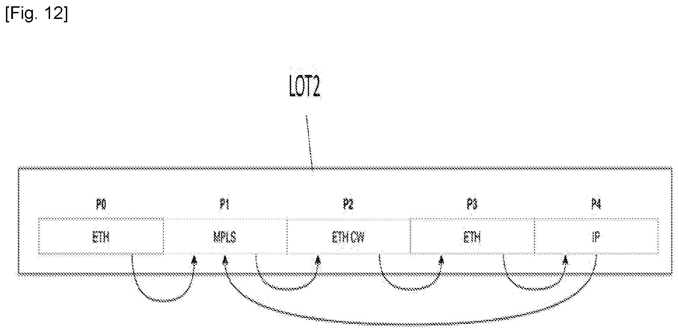

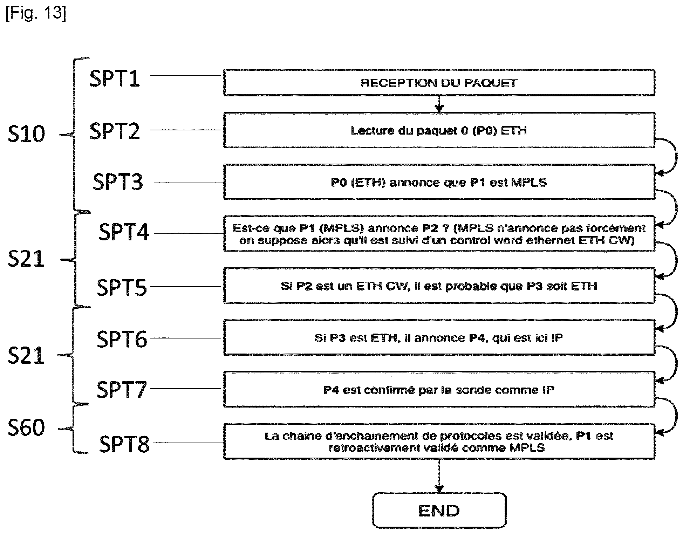

En référence aux figures 12, et 13 on a représenté, à titre d'exemple, une implémentation du procédé selon l'invention pour une analyse appliquée à une détection de protocoles de tunneling, nécessitant une détection retardée conformément à l'invention.

Ici le lot LOT2 comprend quatre paquets individualisés PO, P1, P2, et P3. Le paquet PO supporte le protocole ETHERNET ETH. Le paquet P1 supporte le protocole MPLS. Le paquet P2 supporte le protocole ETH CW et le paquet P3 supporte le protocole IP.

Après réception du lot LOT2 de paquets (étape SPT1), le paquet P0 est lu (étape SPT2), ici P0 = ETH. À l'étape SPT3, le moteur d'analyse 106 vérifie si le paquet P0 annonce le protocole du paquet suivant P1 selon l'étape de classification explicite S10. Ici, on sait ici que ETH annonce toujours le protocole qui suit. Ici P1 = MPLS.

À l'étape SPT4, le moteur vérifie si le paquet P1 annonce le protocole du paquet suivant P2. Ici on sait que MPLS n'annonce pas forcément le protocole du paquet suivant.

L'analyse de protocole selon l'invention met en œuvre une analyse selon une classification par détection de session S20 et par inspection profonde de paquet S40, pour lequel les protocoles les plus probables sont testés.

On suppose alors que P2 est suivi d'un mot de contrôle ETH CW.

Le procédé selon l'invention comprendra, en outre, une étape de supposition du protocole restant le plus probable, et continuera la détection sur le protocole suivant en testant le ou les protocoles suivant normalement le premier protocole supposé.

A l'étape SPT5, si P2 = ETW CW alors il est probable que P3 = ETH, les étapes S20 et S40 de classification seront alors répétées pour vérifier si ETH est bien identifié et validé.

A l'étape SPT6, si P3 = ETH alors P3 annonce P4 qui est ici IP.

A l'étape SPT7, P4 est confirmé par la sonde comme IP.

A l'étape SPT8, la chaine d'enchainement de protocoles est validée, P2 est rétroactivement validé comme ETH CW.

En pratique, l'identification des protocoles probables et leurs tests en cas d'échec d'identification est répétée jusqu'à ce qu'une limite du nombre de tests choisis soit atteinte.

Avantageusement, le procédé de détection selon l'invention, comprenant une gestion d'une table de hash dynamique sur une base de n-tuples, associée à une identification de protocole selon des classifications explicites S10, par détection de session S20, par inspection profonde de paquet S40, et par détection a posteriori, permet de limiter fortement la perte de visibilité et éliminer les erreurs en cascades lors de l'analyse d'un flux de données à très haut débit, contrairement aux systèmes de l'art antérieur et notamment ceux se basant sur un calcul d'empreinte numérique de type 5-tuple.

Le Demandeur a également observé que les systèmes de l'art antérieur nécessitent souvent des techniques matérielles (FPGA ou ASIC) qui permettent de faire du Packet Slicing (découpage du paquet sur les couches inférieures ou supérieures) pour accélérer le traitement des paquets, alors que la solution selon l'invention est un procédé ne nécessitant pas de techniques matérielles pour être implémenté et conserver une vitesse de traitement de paquets stable pour des débits supérieurs à 100 Gb/s à titre d'exemple non limitatif.

Bien que des exemples aient été décrits dans un langage spécifique aux méthodes et/ou aux caractéristiques structurelles, il faut comprendre que la présente invention ne se limite pas aux méthodes ou caractéristiques spécifiques décrites. Au contraire, les méthodes et les caractéristiques spécifiques sont divulguées et expliquées à titre d'exemples de la présente invention.

## Revendications

1. Procédé d'analyse de paquets de données d'un flux de données reçu via un réseau de communication, le flux de données comprenant des lots de paquets, les paquets étant définis chacun par une chaine de protocoles de communication rattachée à au moins une session, **caractérisé en ce que** le procédé comprend une analyse de protocoles (DAP) selon les étapes suivantes :
- analyser le premier protocole (Pi) d'une chaine de protocoles de communication selon une étape de classification par détection explicite (S10) configurée pour vérifier si le premier protocole (Pi) annonce le protocole de communication suivant (Pi+1) de la chaine de protocoles :
- en cas d'annonce, le protocole suivant (Pi+1) ainsi annoncé est identifié ;
- tandis qu'en cas de non-annonce, analyser le protocole suivant (Pi+1) selon une étape de classification par détection de session (S20) ; où l'étape de classification par détection de session (S20), est configurée pour vérifier si le protocole Pi+1 est attaché à une chaine de protocoles connue selon un arbre de décision dynamique par interrogation d'une base de données dynamique de session (BDDS) comprenant des chaines de protocoles identifiées :
- en cas d'attache, le protocole Pi+1 est identifié, et le protocole Pi+2 est analysé par répétition des étapes de classification par détection explicite (S10), et de classification par détection de session (S20) ;
- tandis qu'en cas de non-attache, analyser le protocole Pi+1 selon une étape de classification par inspection profonde de paquet (S40) où l'étape de classification par inspection profonde de paquet (S40), est configurée pour identifier le protocole de communication du paquet Pi+1 selon un arbre de décision dynamique corrélé à une base de données de connaissances (BDC) comprenant des paramètres d'analyse de protocoles et une base de marqueurs spécifiques à chaque protocole connu ;
- en cas de défaut d'identification du protocole Pi+1, émettre une liste de candidats de protocoles potentiels à prendre en compte selon au moins deux branches de détection, chaque détection étant rattachée à une sous-session déterminée pour analyser le ou les protocoles suivants Pi+n avec n>_2 par répétition des étapes de classification par détection explicite (S10), de classification par détection de session (S20), et de classification par inspection profonde de paquet (S40) jusqu'à identifier au moins un protocole dont l'identité est certaine ;
- en cas d'identification d'un protocole Pi+n dont l'identité est certaine sur une branche de détection, valider (S60) rétroactivement la branche de détection, et écarter les branches de détection restantes non validées ;
- en cas d'absence d'identification d'un protocole Pi+n dont l'identité est certaine sur une branche de détection, classifier le protocole Pi+1 comme inconnu (S60) rétroactivement ; et
- associer une étiquette aux paquets de données en fonction de chaque session pour lesquels les protocoles ont été identifiés.

2. Procédé d'analyse d'un flux de données de paquets de données reçues via un réseau de communication selon la revendication 1, **caractérisé en ce qu'**après chaque étape de classification (S10, S20, S40) :-
calculer une empreinte numérique de session (Hi+n) à partir d'une fonction de hachage choisie, ladite empreinte numérique (Hi+n) étant calculée sur la base du premier protocole identifié, et sur l'empreinte numérique précédemment calculé (Hi+n-1) de la chaine de protocoles déjà identifiée sans prise en compte du contenu attaché, chaque empreinte numérique (Hi+n) étant calculée sur la base de paramètres (ou tuple) choisis et spécifiques à chaque type de protocole, chaque type de protocole disposant d'un nombre propre de marqueurs définis (n-Tuples) ;
- enregistrer l'empreinte numérique de session (Hi+n) calculée après chaque étape d'identification de protocole suivant l'étape S40 ou après l'étape de validation rétroactive (S60), dans une table de hash intégrée dans la base de données dynamique de session (BDDS), chaque empreinte numérique (Hi+n) étant liée à au moins une session choisie, lesdites empreintes numériques (Hi+n) calculées après chaque étape de classification de chaque protocole par inspection profonde de paquet (S40) étant aptes à être mises à jour rétroactivement en cas d'identification retardée d'un protocole selon l'étape de vérification (S60).

3. Procédé d'analyse d'un flux de données de paquets de données reçues via un réseau de communication selon la revendication 2, **caractérisé en ce qu'**en cas de détection de protocoles tunnelés, multiplexés, multicanal de manière certaine, le procédé selon l'invention comprend les sous-étapes suivantes :
- Générer au moins une branche de détection par protocole vérifié à prendre en compte pour la détection ultérieure,
- Calculer une empreinte numérique de session (Hi+n) à partir d'une fonction de hachage choisie pour chaque branche de détection, chaque branche de détection étant rattachée à une sous-session déterminée pour analyser le ou les protocoles suivants Pi+n ; et
- Enregistrer l'empreinte numérique de session (Hi+n) de chaque branche de détection rattachée à une chaine de protocole, l'étape d'enregistrement étant configurée pour attribuer un identifiant unique à chaque branche de détection du/des protocoles tunnelés, multiplexés, multicanaux, ou multiplexés détectés.

4. Procédé d'analyse d'un flux de données de paquets de données reçus via un réseau de communication selon la revendication 2 ou la revendication 3, **caractérisé en ce que** la table de hash est mise à jour si la détection d'au moins un protocole d'une session nécessite la mise en œuvre d'une détection retardée sur plusieurs paquets (S60).

5. Procédé selon l'une des revendications 1 à 4, dans lequel la base de données de connaissances (BDC) comprend une base de données de connaissances statiques, dans laquelle la base de données de connaissances statiques comprend des marqueurs basés sur une connaissance empirique des caractéristiques des protocoles, et dans lesquels la connaissance empirique comprend des moyens algorithmiques de détection de protocoles basés sur des normes sur la localisation, des liens logiques entre les protocoles de communication, les requêtes pour commentaires (RFC) et les modèles de fréquence des protocoles de communication.

6. Procédé selon l'une des revendications 1 à 5, comprenant en outre l'exécution d'une analyse de données suivie d'une extraction de données (DAC) pour les paquets de données sur la base de l'étiquette associée.

7. Procédé selon la revendication 6, dans lequel l'exécution de l'analyse de protocoles (DAP) et l'exécution de l'analyse et de l'extraction des données (DAC) pour un paquet de données sont effectuées de manière dynamique sur un seul cœur de traitement d'un processeur multicœur.

8. Procédé selon la revendication 6 ou 7, dans lequel l'exécution de l'analyse et l'extraction des données (DAC) pour le paquet de données sont effectuées sur plusieurs cœurs de traitement d'un processeur multicœur.

9. Procédé selon l'une des revendications 6 à 8, comprenant en outre la séparation du flux de données en une pluralité de files d'attente de traitement dans laquelle l'analyse de protocoles (DAP) suivie de l'analyse et de l'extraction des données (DAC) sont effectués sur des paquets de données dans chacune des files d'attente de traitement.

10. Procédé selon la revendication 9, dans lequel la séparation du flux de données dans la pluralité des files d'attente de traitement est basée sur un algorithme RSS de mise à l'échelle côté réception.

11. Procédé selon l'une des revendications 1 à 10, dans lequel l'analyse de protocole (DAP) est exécutée de manière dynamique sur les couches 2 à 7 du modèle de couches (OSI).

12. Système informatique d'analyse de paquets de données d'un flux de données reçu via un réseau de communication, le flux de données comprenant des lots de paquets, les paquets étant définis chacun par une chaine de protocoles de communication rattaché à au moins une session, **caractérisé en ce que** le système comprend un processeur comprenant au moins un cœur de traitement pour traiter un nombre prédéterminé de paquets de données par minute et un moteur d'analyse de protocole (106) sur au moins un cœur de traitement, dans lequel le moteur d'analyse de protocole (106) est configuré pour effectuer les étapes suivantes:
- analyse du premier protocole (Pi) d'une chaine de protocoles de communication selon une étape de classification par détection explicite (S10) configurée pour vérifier si le premier protocole (Pi) annonce le protocole de communication suivant (Pi+1) de la chaine de protocoles, en cas d'annonce, le protocole suivant (Pi+1) ainsi annoncé est identifié, tandis qu'en cas de non-annonce, le moteur d'analyse de protocole (106) est apte à analyser le protocole (Pi+1) selon une étape de classification par détection de session (S20) ;
- analyse selon une étape de classification par détection de session (S20), configurée pour vérifier s'il le protocole Pi+1 est attaché à une chaine de protocoles connue selon un arbre de décision dynamique par interrogation d'une base de données dynamique de session (BDDS) comprenant des chaines de protocoles identifiées :
- en cas d'attache, le protocole Pi+1 est identifié, et le moteur d'analyse de protocole (106) est apte à analyser le protocole Pi+2 par répétition des étapes de classification par détection explicite (S10), et de classification par détection de session (S20) ;
- tandis qu'en cas de non-attache, le moteur d'analyse de protocole (106) est apte à analyser le protocole Pi+1 selon une étape de classification par inspection profonde de paquet (S40) ;
- analyse le protocole Pi+1 selon une étape de classification par inspection profonde de paquet (S40), configurée pour identifier le protocole de communication du paquet Pi+1 selon un arbre de décision dynamique corrélé à une base de données de connaissances (BDC) comprenant des paramètres d'analyse de protocoles et une base de marqueurs spécifiques à chaque protocole connu ;
- en cas de défaut d'identification du protocole Pi+1, le moteur d'analyse de protocole (106) est apte à émettre une liste de candidats de protocoles potentiels à prendre en compte selon au moins deux branches de détection, chaque détection étant rattachée à une sous-session déterminée pour analyser le ou les protocoles suivants Pi+n avec n>_2 par répétition des étapes de classification par détection explicite (S10), de classification par détection de session (S20), et de classification par inspection profonde de paquet (S40) jusqu'à identifier au moins un protocole dont l'identité est certaine ;
- en cas d'identification d'un protocole Pi+n dont l'identité est certaine sur une branche de détection, le moteur d'analyse de protocole (106) est apte à valider (S60) rétroactivement la branche de détection, et écarter les branches de détection restantes non validées ;
- en cas d'absence d'identification d'un protocole Pi+n dont l'identité est certaine sur une branche de détection, le moteur d'analyse de protocole (106) est apte à classifier le protocole Pi+1 comme inconnu (S60) rétroactivement ; et
- un moteur d'étiquetage apte à associer une étiquette aux paquets de données en fonction des protocoles ainsi identifiés.

13. Système informatique selon la revendication 12, **caractérisé en ce que** le moteur d'analyse de protocole (106) :
- calcule une empreinte numérique de session (Hi+n) à partir d'une fonction de hachage choisie après chaque étape de classification (S10, S20, S40), ladite empreinte numérique (Hi+n) étant calculée sur la base du premier protocole identifié, et sur l'empreinte numérique précédemment calculée (Hi+n-1) de la chaine de protocoles déjà identifiée sans prise en compte du contenu attaché, chaque empreinte numérique (Hi+n) étant calculée sur la base de paramètres (ou tuple) choisis et spécifiques à chaque type de protocole, chaque type de protocole disposant d'un nombre propre de marqueurs définis (n-Tuples) ;
- enregistre l'empreinte numérique de session (Hi+n) calculée après chaque étape d'identification de protocole suivant l'étape S40 ou après l'étape de validation rétroactive (S60), dans une table de hash intégrée dans la base de données dynamique de session (BDDS), chaque empreinte numérique (Hi+n) étant liée à au moins une session choisie, lesdites empreintes numériques (Hi+n) calculées après chaque étape de classification de chaque protocole par inspection profonde de paquet (S40) étant aptes à être mises à jour rétroactivement en cas d'identification retardée d'un protocole selon l'étape de vérification (S60).

14. Système informatique selon la revendication 12 ou 13, **caractérisé en ce que** le moteur d'analyse de protocole (106), en cas de détection de protocoles tunnelés, multiplexés, multicanaux, ou multicanal multiplexés détectés de manière certaine,
- Génère au moins une branche de détection par protocole vérifié à prendre en compte pour la détection ultérieure,
- Calcule une empreinte numérique de session (Hi+n) à partir d'une fonction de hachage choisie pour chaque branche de détection, chaque branche de détection étant rattachée à une sous-session déterminée pour analyser le ou les protocoles suivants Pi+n ; et
- Enregistre l'empreinte numérique de session (Hi+n) de chaque branche de détection rattachée à une chaine de protocole, l'enregistrement étant configuré pour attribuer un identifiant unique à chaque branche de détection du/des protocoles tunnelés, multiplexés, multicanaux, ou multicanal multiplexés détectés.

15. Système informatique selon l'une des revendications 12 à 14, dans lequel la base de données de connaissances comprend, en outre, une base de données de connaissances statiques dans laquelle la base de données de connaissances statiques comprend des marqueurs basés sur une connaissance empirique des caractéristiques des protocoles, et dans lesquels la connaissance empirique comprend des moyens algorithmiques de détection de protocoles basés sur des normes sur la localisation, des liens logiques entre les protocoles de communication, les requêtes pour commentaires (RFC) et les modèles de fréquence des protocoles de communication.

16. Système informatique selon l'une des revendications 12 à 15, comprenant, en outre, un moteur d'analyse de contenu (112) exécutable sur au moins un cœur de traitement pour analyser et extraire le paquet de données sur la base de l'étiquette associée.

17. Système informatique selon la revendication 16, dans lequel le moteur d'analyse de protocole (106) et le moteur d'analyse de contenu (112) effectuent consécutivement l'analyse de protocoles (DAP) suivie de l'analyse et de l'extraction de données (DAC) pour le flux de données de paquets de données, et dans lequel le moteur d'analyse de contenu effectue, séparément, l'analyse et l'extraction de données (DAC) pour des paquets de données étiquetés différemment.

18. Système informatique selon la revendication 16 ou 17, comprenant en outre une carte d'interface réseau (NIC) couplée au processeur, dans laquelle la carte réseau sépare le flux de données des paquets de données en une pluralité de files d'attente de traitement, et dans laquelle le moteur d'analyse de protocole (DAP) et le moteur d'analyse de contenu (112) effectuent l'analyse des paquets (DAP) et l'extraction de données (DAC) des paquets sur chacune des pluralités de files d'attente de traitement.

19. Système informatique selon la revendication 18, dans lequel la carte réseau (NIC) sépare le flux de données des paquets de données en fonction de l'algorithme RSS de mise à l'échelle côté réception.

## Patentansprüche

1. Verfahren zur Analyse von Datenpaketen eines über ein Kommunikationsnetz empfangenen Datenstroms, wobei der Datenstrom Stapel von Paketen umfasst, wobei die Pakete jeweils durch eine Kette von Kommunikationsprotokollen definiert sind, die mindestens einer Sitzung zugeordnet ist, **dadurch gekennzeichnet, dass** das Verfahren eine Protokollanalyse (DAP) gemäß den folgenden Schritten umfasst:
- Analyse des ersten Protokolls (Pi) einer Kette von Kommunikationsprotokollen in einem Schritt der Klassifizierung durch explizite Erkennung (S10), der so aufgebaut ist, dass überprüft wird, ob das erste Protokoll (Pi) das nächste Kommunikationsprotokoll (Pi+1) der Protokollkette ankündigt:
- im Falle einer Ankündigung wird das so angekündigte nächste Protokoll (Pi+1) identifiziert;
- wohingegen im Falle einer Nichtankündigung das nächste Protokoll (Pi+1) in einem Schritt der Klassifizierung durch Sitzungserkennung (S20) analysiert wird; wobei der Schritt der Klassifizierung durch Sitzungserkennung (S20) so aufgebaut ist, dass überprüft wird, ob das Protokoll Pi+1 an eine bekannte Protokollkette gemäß einem dynamischen Entscheidungsbaum angehängt ist, indem eine dynamische Sitzungsdatenbank (DSDB) mit identifizierten Protokollketten abgefragt wird:
- im Falle eines angehängten Protokolls Pi+1 wird dieses identifiziert und das Protokoll Pi+2 analysiert, indem die Schritte der Klassifizierung durch explizite Erkennung (S10) und der Klassifizierung durch Sitzungserkennung (S20) wiederholt werden;
- wohingegen bei fehlendem Anhang das Protokoll Pi+1 in einem Schritt der Klassifizierung durch Deep Packet Inspection (S40) analysiert wird, wobei der Schritt der Klassifizierung durch Deep Packet Inspection (S40) so aufgebaut ist, dass das Kommunikationsprotokoll des Pakets Pi+1 gemäß einem dynamischen Entscheidungsbaum identifiziert wird, der mit einer Wissensdatenbank (KDB) korreliert ist, die Protokollanalyseparameter und eine Datenbank von Markern umfasst, die für jedes bekannte Protokoll spezifisch sind;
- bei Nichtidentifizierung des Protokolls Pi+1 wird eine Liste von potenziellen Protokollkandidaten ausgegeben, die gemäß mindestens zwei Erkennungszweigen zu berücksichtigen sind, wobei jede Erkennung einer bestimmten Untersitzung zugeordnet ist, um das oder die folgenden Protokolle Pi+n mit n≥2 durch Wiederholung der Schritte der Klassifizierung durch explizite Erkennung (S10), der Klassifizierung durch Sitzungserkennung (S20) und der Klassifizierung durch Deep Packet Inspection (S40) zu analysieren, bis mindestens ein Protokoll identifiziert wird, dessen Identität sicher ist;
- - im Falle der Identifizierung eines Pi+n-Protokolls, dessen Identität auf einem Erkennungszweig sicher ist, werden der Erkennungszweig rückwirkend validiert (S60) und die verbleibenden, nicht validierten Erkennungszweige verworfen;
- bei Nichtidentifizierung eines Protokolls Pi+n, dessen Identität auf einem Erkennungszweig sicher ist, wird das Protokoll Pi+1 rückwirkend als unbekannt (S60) klassifiziert; und
- den Datenpaketen auf der Grundlage jeder Sitzung, für die die Protokolle identifiziert wurden, ein Label zugeordnet.

2. Verfahren zur Analyse eines Datenstroms von Datenpaketen, die über ein Kommunikationsnetz nach Anspruch 1 empfangen werden, **dadurch gekennzeichnet, dass** nach jedem Klassifizierungsschritt (S10, S20, S40):
- ein Sitzungs-Fingerabdruck (Hi+n) anhand einer ausgewählten Hash-Funktion berechnet wird, wobei der Fingerabdruck (Hi+n) auf der Grundlage des ersten identifizierten Protokolls und des zuvor berechneten Fingerabdrucks (Hi+n-1) der bereits identifizierten Protokollkette ohne Berücksichtigung des angehängten Inhalts berechnet wird, wobei jeder Fingerabdruck (Hi+n) auf der Grundlage ausgewählter, für jeden Protokolltyp spezifischer Parameter (oder Tupel) berechnet wird, wobei jeder Protokolltyp über eine eigene Anzahl von definierten Markern (n-Tupel) verfügt;
- der Sitzungs-Fingerabdruck (Hi+n), der nach jedem Schritt der Identifizierung des Protokolls gemäß Schritt S40 oder nach dem Schritt der rückwirkenden Validierung (S60) berechnet wird, in einer in die dynamische Sitzungsdatenbank (BDDS) integrierten Hash-Tabelle gespeichert wird, wobei jeder Fingerabdruck (Hi+n) mit mindestens einer ausgewählten Sitzung verbunden ist, wobei die Fingerabdrücke (Hi+n), die nach jedem Schritt der Klassifizierung jedes Protokolls durch Deep Packet Inspection (S40) berechnet werden, im Falle einer verzögerten Identifizierung eines Protokolls gemäß dem Verifizierungsschritt (S60) rückwirkend aktualisiert werden können.

3. Verfahren zur Analyse eines Datenstroms von Datenpaketen, die über ein Kommunikationsnetz nach Anspruch 2 empfangen werden, **dadurch gekennzeichnet, dass** das Verfahren gemäß Erfindung im Falle der sicheren Erkennung von getunnelten, gemultiplexten, mehrkanaligen Protokollen die folgenden Teilschritte umfasst:
- Generieren von mindestens einem Erkennungszweig pro verifiziertem Protokoll, der bei der späteren Erkennung zu berücksichtigen ist,
- Berechnen eines Sitzungs-Fingerabdrucks (Hi+n) ausgehend von einer für jeden Erkennungszweig ausgewählten Hash-Funktion, wobei jeder Erkennungszweig einer bestimmten Untersitzung zugeordnet ist, um das oder die folgenden Protokolle Pi+n zu analysieren; und
- Speichern des Sitzungs-Fingerabdrucks (Hi+n) jedes Erkennungszweigs, der einer Protokollkette zugeordnet ist, wobei der Schritt der Speicherung so gestaltet ist, dass er jedem Erkennungszweig des/der erkannten getunnelten, gemultiplexten, mehrkanaligen Protokolls/e eine eindeutige Kennung zuweist.

4. Verfahren zur Analyse eines Datenstroms von Datenpaketen, die über ein Kommunikationsnetz nach Anspruch 2 oder Anspruch 3 empfangen werden, **dadurch gekennzeichnet, dass** die Hash-Tabelle aktualisiert wird, wenn die Erkennung mindestens eines Protokolls einer Sitzung die Durchführung einer verzögerten Erkennung über mehrere Pakete (S60) erfordert.

5. Verfahren nach einem der Ansprüche 1 bis 4, in dem die Wissensdatenbank (KDB) eine statische Wissensdatenbank umfasst, wobei die statische Wissensdatenbank Marker umfasst, die auf empirischem Wissen betreffend die Eigenschaften der Protokolle basieren, wobei das empirische Wissen algorithmische Mittel zur Erkennung von Protokollen umfasst, die auf Normen über den Standort, logische Verbindungen zwischen den Kommunikationsprotokollen, Anfragen für Kommentare (RFCs) und Frequenzmodelle der Kommunikationsprotokolle basieren.

6. Verfahren nach einem der Ansprüche 1 bis 5, das außerdem die Durchführung einer Datenanalyse gefolgt von einer Datenextraktion (DAC) für die Datenpakete auf der Grundlage des zugehörigen Labels umfasst.

7. Verfahren nach Anspruch 6, wobei die Ausführung der Protokollanalyse (DAP) und die Ausführung der Datenanalyse und -extraktion (DAC) für ein Datenpaket dynamisch auf einem einzelnen Verarbeitungskern eines Multicore-Prozessors erfolgt.

8. Verfahren nach Anspruch 6 oder 7, in dem die Durchführung der Analyse und die Extraktion der Daten (DAC) für das Datenpaket auf mehreren Verarbeitungskernen eines Multicore-Prozessors durchgeführt werden.

9. Verfahren nach einem der Ansprüche 6 bis 8, das ferner das Aufteilen des Datenstroms in eine Vielzahl von Verarbeitungswarteschlangen umfasst, wobei die Protokollanalyse (DAP), gefolgt von der Datenanalyse und -extraktion (DAC), an Datenpaketen in jeder Verarbeitungswarteschlange durchgeführt wird.

10. Verfahren nach Anspruch 9, in dem die Aufteilung des Datenstroms in eine Vielzahl von Verarbeitungswarteschlangen auf einem RSS-Algorithmus zur empfangsseitigen Skalierung beruht.

11. Verfahren nach einem der Ansprüche 1 bis 10, in dem die Protokollanalyse (DAP) dynamisch auf den Schichten 2 bis 7 des Schichtenmodells (OSI) ausgeführt wird.

12. Computersystem zur Analyse von Datenpaketen eines über ein Kommunikationsnetz empfangenen Datenstroms, wobei der Datenstrom Stapel von Paketen umfasst, wobei jedes Paket jeweils durch eine Kette von Kommunikationsprotokollen definiert ist, die mindestens einer Sitzung zugeordnet sind, **dadurch gekennzeichnet, dass** das System einen Prozessor mit mindestens einem Verarbeitungskern zur Verarbeitung einer vorgegebenen Anzahl von Datenpaketen pro Minute und eine Protokollanalyse-Engine (106) auf mindestens einem Verarbeitungskern umfasst, wobei die Protokollanalyse-Engine (106) so aufgebaut ist, dass sie die folgenden Schritte ausführt:
- Analyse des ersten Protokolls (Pi) einer Kette von Kommunikationsprotokollen gemäß einem Schritt der Klassifizierung durch explizite Erkennung (S10), die so aufgebaut ist, dass geprüft wird, ob das erste Protokoll (Pi) das nächste Kommunikationsprotokoll (Pi+1) der Protokollkette ankündigt, wobei im Falle einer Ankündigung das so angekündigte nächste Protokoll (Pi+1) identifiziert wird, während im Falle einer Nicht-Ankündigung die Protokollanalyse-Engine (106) das Protokoll (Pi+1) in einem Schritt der Klassifizierung durch Sitzungserkennung (S20) analysieren kann;
- Analyse in einem Schritt der Klassifizierung durch Sitzungserkennung (S20), der so aufgebaut ist, dass geprüft wird, ob das Protokoll Pi+1 an eine bekannte Protokollkette gemäß einem dynamischen Entscheidungsbaum angehängt ist, indem eine dynamische Sitzungsdatenbank (DSDB) mit identifizierten Protokollketten abgefragt wird:
- im Falle eines angehängten Protokolls Pi+1 dieses identifiziert wird und die Protokollanalyse-Engine (106) das Protokoll Pi+2 durch Wiederholung der Schritte der Klassifizierung durch explizite Erkennung (S10) und der Klassifizierung durch Sitzungserkennung (S20) analysieren kann;
- wohingegen bei nichtangehängtem Protokoll die Protokollanalyse-Engine (106) das Protokoll Pi+1 gemäß einem Deep Packet Inspection-Klassifikationsschritt (S40) analysieren kann;
- Analyse des Protokolls Pi+1 in einem Schritt der Klassifizierung durch Deep Packet Inspection (S40), der so aufgebaut ist, dass er das Kommunikationsprotokoll des Pakets Pi+1 gemäß einem dynamischen Entscheidungsbaum identifiziert, der mit einer Wissensdatenbank (WDB) korreliert ist, die Protokollanalyseparameter und eine Datenbank von Markern umfasst, die für jedes bekannte Protokoll spezifisch sind;
- bei Nichtidentifizierung des Protokolls Pi+1 kann die Protokollanalyse-Engine (106) eine Liste von potenziellen Protokollkandidaten ausgeben, die gemäß mindestens zwei Erkennungszweigen zu berücksichtigen sind, wobei jede Erkennung einer bestimmten Untersitzung zugeordnet ist, um das oder die folgenden Protokolle Pi+n mit n≥ 2 durch Wiederholung der Schritte der Klassifizierung durch explizite Erkennung (S10), durch Sitzungserkennung (S20) und durch Deep Packet Inspection (S40) zu analysieren, bis mindestens ein Protokoll identifiziert wird, dessen Identität sicher ist;
- im Fall der Identifizierung eines Protokolls Pi+n, dessen Identität auf einem Erkennungszweig sicher ist, kann die Protokollanalyse-Engine (106) den Erkennungszweig rückwirkend validieren (S60) und die verbleibenden, nicht validierten Erkennungszweige verwerfen;
- bei fehlender Identifizierung eines Protokolls Pi+n, dessen Identität auf einem Erkennungszweig sicher ist, ist die Protokollanalyse-Engine (106) in der Lage, das Protokoll Pi+1 rückwirkend als unbekannt (S60) zu klassifizieren; und
- eine Label-Engine ist in der Lage, den Datenpaketen entsprechend den so identifizierten Protokollen ein Label zuzuordnen.

13. Computersystem nach Anspruch 12, **dadurch gekennzeichnet, dass** die Protokollanalyse-Engine (106):
- einen Sitzungs-Fingerabdruck der Sitzung (Hi+n) anhand einer Hash-Funktion berechnet, die nach jedem Klassifizierungsschritt (S10, S20, S40) ausgewählt wird, wobei der Fingerabdruck (Hi+n) auf der Grundlage des ersten identifizierten Protokolls berechnet wird, auf dem zuvor berechneten Fingerabdruck (Hi+n-1) der bereits identifizierten Protokollkette ohne Berücksichtigung des angehängten Inhalts, wobei jeder Fingerabdruck (Hi+n) auf der Grundlage von ausgewählten Parametern (oder Tupeln) berechnet wird, die für jeden Protokolltyp spezifisch sind, wobei jeder Protokolltyp über eine eigene Anzahl von definierten Markern (n-Tupel) verfügt;
- den Sitzungs-Fingerabdruck (Hi+n), der nach jedem Schritt der Protokollidentifizierung gemäß Schritt S40 oder nach dem Schritt der rückwirkenden Validierung (S60) berechnet wird, in einer Hash-Tabelle speichert, die in die dynamische Sitzungsdatenbank (BDDS) integriert ist, wobei jeder Fingerabdruck (Hi+n) mit mindestens einer ausgewählten Sitzung verknüpft ist, wobei die digitalen Fingerabdrücke (Hi+n), die nach jedem Schritt der Klassifizierung jedes Protokolls durch Deep Packet Inspection (S40) berechnet werden, im Falle einer verzögerten Identifizierung eines Protokolls gemäß dem Verifizierungsschritt (S60) rückwirkend aktualisiert werden können.

14. Computersystem nach Anspruch 12 oder 13, **dadurch gekennzeichnet, dass** die Protokollanalyse-Engine (106) im Falle der Erkennung von sicher erkannten getunnelten, gemultiplexten, mehrkanaligen Protokollen,
- mindestens einen Erkennungszweig pro verifiziertem Protokoll erzeugt, der bei der späteren Erkennung berücksichtigt wird,
- einen Sitzungs-Fingerabdruck (Hi+n) aus einer Hash-Funktion berechnet, die für jeden Erkennungszweig ausgewählt wurde, wobei jeder Erkennungszweig einer Untersitzung zugeordnet ist, die bestimmt wurde, um das oder die folgenden Protokolle Pi+n zu analysieren; und
- den Sitzungs-Fingerabdruck (Hi+n) jedes an eine Protokollkette angehängten Erkennungszweigs speichert, wobei die Speicherung so aufgebaut ist, dass sie jedem Erkennungszweig des/der erkannten getunnelten, gemultiplexten, mehrkanaligen Protokolls/Protokolle eine eindeutige Kennung zuweist.

15. Computersystem nach einem der Ansprüche 12 bis 14, wobei die Wissensdatenbank zusätzlich eine statische Wissensdatenbank umfasst, wobei die statische Wissensdatenbank Marker umfasst, die auf empirischem Wissen über die Eigenschaften von Protokollen basieren, wobei das empirische Wissen algorithmische Mittel zur Erkennung von Protokollen umfasst, die auf Normen über den Standort, logische Verbindungen zwischen Kommunikationsprotokollen, Anfragen für Kommentare (RFCs) und Frequenzmodellen von Kommunikationsprotokollen basieren.

16. Computersystem nach einem der Ansprüche 12 bis 15, das außerdem eine Inhaltsanalyse-Engine (112) umfasst, die auf mindestens einem Verarbeitungskern ausführbar ist, um das Datenpaket auf der Grundlage des zugehörigen Labels zu analysieren und zu extrahieren.

17. Computersystem nach Anspruch 16, wobei die Protokollanalyse-Engine (106) und die Inhaltsanalyse-Engine (112) nacheinander die Protokollanalyse (DAP) gefolgt von der Datenanalyse und -extraktion (DAC) für den Datenstrom von Datenpaketen durchführen, und wobei die Inhaltsanalyse-Engine die Datenanalyse und -extraktion (DAC) für unterschiedlich gekennzeichnete Datenpakete getrennt durchführt.

18. Computersystem nach Anspruch 16 oder 17, ferner umfassend eine mit dem Prozessor gekoppelte Netzwerkschnittstellenkarte (NIC), wobei die Netzwerkkarte den Datenstrom der Datenpakete in eine Vielzahl von Verarbeitungswarteschlangen aufteilt und wobei die Protokollanalyse-Engine (DAP) und die Inhaltsanalyse-Engine (112) die Paketanalyse (DAP) und die Datenextraktion (DAC) der Pakete auf jeder der Vielzahl von Verarbeitungswarteschlangen durchführen.

19. Computersystem nach Anspruch 18, bei dem die Netzwerkkarte (NIC) den Datenstrom von den Datenpaketen entsprechend dem RSS-Algorithmus zur Skalierung auf der Empfangsseite trennt.

## Claims

1. A method for analysing a data stream of batches of packets received via a communications network, wherein the data stream comprises batches of packets each defined by a chain of communication protocols attached to at least one session, **characterised in that** the method comprises a protocol analysis (DAP) according to the following steps:
- -analysing the first protocol (Pi) of a chain of communication protocols according to an explicit detection classification step (S10) configured to check whether the first protocol (Pi) announces the next communication protocol (Pi+1) of the protocol chain:
- -in the case of announcement, the next protocol (Pi+1) thus announced is identified;
- -In case of non announcement, analysing the next protocol (Pi+1) according to a session detection classification step (S20); wherein the session detection classification step (S20), configured to check whether the protocol (Pi+1) is attached to a known protocol chain according to a dynamic decision-making tree by querying a dynamic session database (BDDS) comprising identified protocol chains:
- -in the case of attachment, the protocol Pi+1 is identified, and the protocol Pi+2 is analysed by repeating the explicit detection classification step (S10) and session detection classification step (S20);
- -whereas in the case of non attachment, analyses the protocol Pi+1 according to a deep packet inspection classification step (S40), wherein the deep packet inspection classification step (S40) is configured to identify the packet communication protocol Pi+1 according to a dynamic decision-making tree correlated to a knowledge database (BDC) comprising protocol analysis parameters and a database of markers specific to each known protocol;
- - if the protocol Pi+1 is not identified, issuing a list of potential candidate protocols to be taken into account according to at least two detection branches, each detection being attached to a determined sub-session in order to analyse the next protocol or protocols Pi+n with n≥2 by repeating the steps of explicit detection classification (S10), session detection classification (S20), and deep packet inspection classification (S40) until at least one protocol, the identity of which is certain, is identified;
- -if a protocol Pi+n, the identity of which is certain, is identified on a detection branch, retrospectively validating (S60) the detection branch, and discarding the remaining non-validated detection branches;
- -in the case of failure to identify a protocol Pi+n, the identity of which is certain, on a detection branch, retrospectively classifying the protocol Pi+1 as unknown (S60); and
- -associating a label with the data packets according to each session for which the protocols have been identified.

2. The method for analysing a data stream of data packets received via a communications network according to claim 1, **characterised in that** after each classification step (S10, S20, S40):
- calculating a digital session fingerprint (Hi+n) from a chosen hash function, said digital fingerprint (Hi+n) being calculated on the basis of the first protocol identified, and on the previously calculated digital fingerprint (Hi+n-1) of the protocol chain already identified without taking into account the attached content, wherein each digital fingerprint (Hi+n) is calculated on the basis of chosen parameters (or tuple) specific to each type of protocol, each type of protocol having its own number of defined markers (n-Tuples);
- saving the digital session fingerprint (Hi+n) calculated after each protocol identification step following step S40 or after the retroactive validation step (S60), in a hash table integrated into the dynamic session database (BDDS), each digital fingerprint (Hi+n) being linked to at least one chosen session, said digital fingerprints (Hi+n) calculated after each deep packet inspection protocol classification step (S40) being capable of being retroactively updated in the event of delayed identification of a protocol according to the checking step (S60).

3. The method for analysing a data stream of data packets received via a communications network according to claim 2, **characterised in that** when tunnelled, multiplexed or multi-channel protocols are detected with certainty, the method according to the invention comprises the following sub-steps:
- -generating at least one detection branch per verified protocol to be taken into account for subsequent detection,
- -calculating a digital session fingerprint (Hi+n) from a hash function chosen for each detection branch, wherein each detection branch is attached to a sub-session determined to analyse the next protocol(s) Pi+n; and
- -saving the digital session fingerprint (Hi+n) of each detection branch attached to a protocol chain, wherein the saving step is configured to assign a unique identifier to each detection branch of the detected tunnelled, multiplexed or multi-channel protocol(s).

4. The method for analysing a data stream of data packets received via a communications network according to claim 2 or claim 3, **characterised in that** the hash table is updated if the detection of at least one session protocol requires the implementation of delayed detection on several packets (S60).

5. The method according to any of claims 1 **to 4,** wherein the knowledge database (BDC) comprises a static knowledge database, wherein the static knowledge database comprises markers based on empirical knowledge of the characteristics of the protocols, and wherein the empirical knowledge comprises algorithmic means of detecting protocols based on location standards, logical links between communication protocols, requests for comments (RFC) and frequency models of communication protocols.

6. The method according to any of claims 1 to 5, also comprising performing a data analysis followed by a data extraction (DAC) for the data packets based on the associated label.

7. The method according to claim 6, wherein the protocol analysis (DAP), and the analysis and extraction of the data (DAC) for a data packet are performed dynamically on a single processing core of a multi-core processor.

8. The method according to claim 6 or 7, wherein the analysis and the extraction of the data (DAC) for the data packet are performed on several processing cores of a multi-core processor.

9. The method according to any of claims 6 to 8, furthermore comprising separating the data stream into a plurality of processing queues wherein the protocol analysis (DAP) followed by the analysis and extraction of the data (DAC) are performed on data packets in each of the processing queues.

10. The method according to claim 9, wherein the separation of the data stream into the plurality of processing queues is based on an RSS scaling algorithm on the receiving side.

11. The method according to any of claims 1 to 10, wherein the protocol analysis (DAP) is performed dynamically on layers 2 to 7 of the (OSI) layer model.

12. An IT system for analysing a data stream of data packets received via a communications network, wherein the data stream comprises batches of packets each defined by a chain of communication protocols attached to at least one session, **characterised in that** the method comprises a processor comprising at least one processing core for processing a predetermined number of data packets per minute and a protocol analysis engine (106) on the at least one processing core, wherein the protocol analysis engine (106) is configured to perform the following steps:
- analysing the first protocol (Pi) of a chain of communication protocols according to an explicit detection classification step (S10) configured to check whether the first protocol (Pi) announces the next communication protocol (Pi+1) of the protocol chain, in the case of announcement, the next protocol (Pi+1) thus announced is identified, whereas in the case of non-announcement, the protocol analysis engine (106) is capable of analysing the protocol (Pi+1) according to a session detection classification step (S20);
- analysing according to a session detection classification step (S20), configured to check whether the protocol Pi+1 is attached to a known protocol chain according to a dynamic decision-making tree by querying a dynamic session database (BDDS) comprising identified protocol chains:
- -in the case of attachment, the protocol Pi+1 is identified, and the protocol analysis engine (106) is capable of analysing the protocol Pi+2 by repeating the explicit detection classification step (S10) and session detection classification step (S20);
- - whereas in the case of non-attachment, the protocol analysis engine (106) is capable of analysing the protocol Pi+1 according to a deep packet inspection classification step (S40);
- -analysing the protocol Pi+1 according to a deep packet inspection classification step (S40), configured to identify the packet communication protocol Pi+1 according to a dynamic decision-making tree correlated to a knowledge database (BDC) comprising protocol analysis parameters and a database of markers specific to each known protocol;
- - if the protocol Pi+1 is not identified, the protocol analysis engine (106) is capable of issuing a list of potential candidate protocols to be taken into account according to at least two detection branches, each detection being attached to a sub-session determined to analyse the next protocol or protocols Pi+n with n≥ 2 by repeating the steps of explicit detection classification (S10), session detection classification (S20), and deep packet inspection classification (S40) until at least one protocol, the identity of which is certain, is identified;
- -if a protocol Pi+n, the identity of which is certain, is identified on a detection branch, the protocol analysis engine (106) is capable of retroactively validating (S60) the detection branch, and discarding the remaining non-validated detection branches;
- -in the case of failure to identify a protocol Pi+n, the identity of which is certain, on a detection branch, the protocol analysis engine (106) is capable of retroactively classifying the protocol Pi+1 as unknown (S60); and
- -a labelling engine capable of associating a label with the data packets as a function of the protocols thus identified.

13. The IT system according to claim 12, **characterised in that** the protocol analysis engine (106):
- -calculates a digital session fingerprint (Hi+n) from a hash function chosen after each classification step (S10, S20, S40), said digital fingerprint (Hi+n) being calculated on the basis of the first protocol identified, and on the previously calculated digital fingerprint (Hi+n-1) of the protocol chain already identified without taking into account the attached content, wherein each digital fingerprint (Hi+n) is calculated on the basis of chosen parameters (or tuple) specific to each type of protocol, each type of protocol having its own number of defined markers (n-Tuples);
- -saves the digital session fingerprint (Hi+n) calculated after each protocol identification step following step S40 or after the retroactive validation step (S60), in a hash table integrated into the dynamic session database (BDDS), each digital fingerprint (Hi+n) being linked to at least one chosen session, said digital fingerprints (Hi+n) calculated after each deep packet inspection protocol classification step (S40) being capable of being retroactively updated in the event of delayed identification of a protocol according to the checking step (S60).

14. The IT system according to claim 12 or 13, **characterised in that** the protocol analysis engine (106), in the event of detection of tunnelled, multiplexed, multi-channel, or multiplexed multi-channel protocols detected with certainty,
- -generates at least one detection branch per verified protocol to be taken into account for subsequent detection,
- -calculates a digital session fingerprint (Hi+n) from a hash function chosen for each detection branch, wherein each detection branch is attached to a sub-session determined to analyse the next protocol(s) Pi+n; and
- -saves the digital session fingerprint (Hi+n) of each detection branch attached to a protocol chain, wherein the saving is configured to assign a unique identifier to each detection branch of the detected tunnelled, multiplexed, multichannel or multiplexed multi-channel protocol (s) .

15. The IT system according to any of claims 12 to 14, wherein the knowledge database furthermore comprises a static knowledge database, wherein the static knowledge database comprises markers based on empirical knowledge of the characteristics of the protocols, and wherein the empirical knowledge comprises algorithmic means of detecting protocols based on location standards, logical links between communication protocols, requests for comments (RFC) and frequency models of communication protocols.

16. The IT system according to any of claims 12 to 15, comprising, furthermore, a content analysis engine (112) executable on at least one processing core to analyse and extract the data packet based on the associated label.

17. IT system according to claim 16, wherein the protocol analysis engine (106) and the content analysis engine (112) consecutively perform protocol analysis (DAP) followed by data analysis and extraction (DAC) for the data stream of data packets, and wherein the content analysis engine performs, separately, data analysis and extraction (DAC) for differently labelled data packets.

18. IT system according to claim 16 or 17, furthermore comprising a network interface card (NIC) coupled to the processor, wherein the network card separates the data stream of data packets into a plurality of processing queues, and wherein the protocol analysis engine (DAP) and the content analysis engine (112) perform packet analysis (DAP) and packet data extraction (DAC) on each of the plurality of processing queues.

19. IT system according to claim 18, wherein the network card (NIC) separates the data stream of data packets according to the RSS scaling algorithm for the receiving side.
